(19) Europäisches Patentamt
European Patent Office
Office européen des brevets

(11) **EP 3 413 031 B1**

(12) **EUROPÄISCHE PATENTSCHRIFT**

(45) Veröffentlichungstag und Bekanntmachung des Hinweises auf die Patenterteilung:
**29.07.2020 Patentblatt 2020/31**

(51) Int Cl.:
*G01N 3/32* *(2006.01)* *G01N 29/04* *(2006.01)*

(21) Anmeldenummer: **18172318.0**

(22) Anmeldetag: **15.05.2018**

(54) **VERFAHREN UND VORRICHTUNG ZUR DYNAMISCHEN BELASTUNGSPRÜFUNG**

METHOD AND DEVICE FOR DYNAMIC LOAD TESTING

PROCÉDÉ ET DISPOSITIF D'ESSAI DYNAMIQUE DE CHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2017 DE 102017112776**

(43) Veröffentlichungstag der Anmeldung:
**12.12.2018 Patentblatt 2018/50**

(73) Patentinhaber: **Bundesrepublik Deutschland, vertreten durch den Bundesminister für Wirtschaft und Energie 12205 Berlin (DE)**

(72) Erfinder: **Auster, Jürgen**
**12437 Berlin (DE)**

(74) Vertreter: **Zimmermann & Partner Patentanwälte mbB Postfach 330 920 80069 München (DE)**

(56) Entgegenhaltungen:
**US-A- 4 283 956 US-A- 4 307 610**

- **MATSUMOTO AI ET AL: "Three-dimensional Visualization of Dynamic Oscillation of Structural Components Using Inhomogeneous Wireless Sensors", PROCEDIA ENGINEERING, ELSEVIER, AMSTERDAM, NL, Bd. 188, 9. Mai 2017 (2017-05-09), Seiten 102-109, XP085009649, ISSN: 1877-7058, DOI: 10.1016/J.PROENG.2017.04.462**

EP 3 413 031 B1

**Beschreibung**

Die vorliegende Erfindung betrifft ein Verfahren zur dynamischen Belastungsprüfung, insbesondere zur dynamischen Belastungsprüfung stabförmiger Biegeproben, sowie eine entsprechende Vorrichtung.

Zur Ermittlung von bruchmechanischen Kennwerten werden standardmäßig Belastungsprüfungen mittels Dreipunktbiegeversuchen (3PBT, von englisch "three-point bending test") an stabförmigem Proben durchgeführt. Hauptmessgrößen bei Dreipunktbiegeversuchen an stabförmigem Proben sind die während der Belastungsprüfung wirkende Normalkraft und die daraus resultierende Durchbiegung der Probe.

Insbesondere bei dynamischen Belastungsprüfungen mittels 3PBT werden wegen der zeitlichen Kürze (typischerweise im Millisekundenbereich) der versuchsrelevanten Ereignisse besonders hohe Anforderungen an die einzusetzende Messtechnik und an die sich anschließende Auswertung und Interpretation der Messdaten gestellt. Insbesondere ist die Bestimmung des Zeitpunktes der Rissinitiierung bzw. des Einsetzens einer Querschnittsänderung anhand der vorliegenden Kraft- und Durchbiegungsmessdaten bei dynamischen Belastungsprüfungen mittels 3PBT häufig zu ungenau. Dies gilt besonders für die Belastungsprüfung von bspw. nicht umlaufend und umlaufend gekerbten stabförmigen Proben.

Die genaue Bestimmung der Kraft, die bei einer bestimmten Dynamik (Belastungsgeschwindigkeit) zu einer Rissbildung bzw. zum Risswachstum im Probenmaterial führt, ist zur Ableitung von bruchmechanischen Materialkennwerten aber von großer Relevanz. Die bei der dynamischen Untersuchung von stabförmigen Proben relativ einfach zu bestimmenden, auf die instrumentierte Probe wirkenden Maximalkräfte entsprechen jedoch häufig nicht den Rissinitiierungskraftbeträgen. Vielmehr liegen die auf die instrumentierte Probe wirkenden Kräfte zum Zeitpunkt der Rissinitiierung in vielen Fällen unterhalb der zu den entsprechenden dynamischen Belastungsversuchen registrierten Maximalkräfte. Dies führt zu einer entsprechenden Unsicherheit und ggf. zu unzureichender Konservativität bei der Bestimmung der bruchmechanischen Kennwerte.

Weiterhin offenbart Ai Matsumoto et al., "Three-dimensional Visualization of Dynamic Oscillation of Structural Components Using Inhomogeneous Wireless Sensors", PROCEDIA ENGINEERING, Bd. 188, 9. Mai 2017, Seiten 102-109, ein Verfahren zur dynamischen Belastungsprüfung.

Im Hinblick auf das oben Gesagte, schlägt die vorliegende Erfindung ein Verfahren zur dynamischen Belastungsprüfung gemäß Anspruch 1 und eine Vorrichtung zur dynamischen Belastungsprüfung gemäß Anspruch 12 vor.

Gemäß einem Ausführungsbeispiel umfasst ein Verfahren zur dynamischen Belastungsprüfung ein Messen und Registrieren eines zeitabhängigen Signals während eines dynamischen Belastens einer Biegeprobe, wobei das zeitabhängige Signal mit einer Formänderung der Biegeprobe während des dynamischen Belastens korreliert ist. Ein Schwingungsmodenpaar umfassend eine erste Schwingungsmode der Biegeprobe vor der Querschnittsänderung und eine der ersten Schwingungsmode entsprechende und/oder mit der ersten Schwingungsmode korrespondierende zweite Schwingungsmode der Biegeprobe nach der Querschnittsänderung wird bestimmt. Das Schwingungsmodenpaar wird zum Bestimmen mindestens eines Filterparameters verwendet. Es wird ein Zeitpunkt bestimmt, bei dem eine Querschnittsänderung der Biegeprobe während des dynamischen Belastens einsetzt. Das Bestimmen des Zeitpunkts umfasst ein Filtern des zeitabhängigen Signals unter Verwendung des mindestens einen Filterparameters, insbesondere ein digitales Filtern des zeitabhängigen Signals unter Verwendung des mindestens einen Filterparameters.

Das Filtern kann aber auch ein analoges Filtern umfassen oder sogar analog erfolgen.

Da sich bei einer Rissbildung bzw. Rissvergrößerung der aktive, die Biegekraft aufnehmende Querschnitt der Biegeprobe (typischerweise nichtreversibel) ändert, kann der Zeitpunkt, bei dem die Querschnittsänderung der Biegeprobe während des dynamischen Belastens einsetzt, durch das digitales Filtern des zeitabhängigen Signals zuverlässig und genau bestimmt werden.

Bei dem zeitabhängigen Signal (zeitabhängigen Messsignal) kann es sich um eine Deformation der Biegeprobe, eine Auslenkung (Amplitude) der Biegeprobe, eine Durchbiegung der Biegeprobe, eine Dehnung der Biegeprobe, eine mechanische Spannung in der Biegeprobe, eine auf die Biegeprobe wirkende (Biege-) Kraft oder eine mit einem oder mehreren dieser Messgrößen korrelierte Größe als Funktion der Zeit handeln.

Der Begriff "Schwingungsmode", wie er vorliegenden verwendet wird, soll eine Eigenschwingungsform der Biegeprobe beschreiben, die typischerweise über ihre Eigenfrequenz (Resonanzfrequenz) und die Modenart, im Folgenden auch als Schwingungsmodenart bezeichnet, charakterisiert werden können. Dabei kann in der Modenart der Schwingungstyp kodiert sein, d.h. insbesondere ob es sich um eine Transversalschwingung, eine Longitudinalschwingung, eine Torsionsschwingung oder eine Überlagerung mehrerer dieser Schwingungsgrundtypen handelt. Außerdem kann in der Modenart kodiert sein, in welcher Ebene bzw. um welche Achse bzgl. eines Koordinatensystems die Schwingung der Eigenschwingungsform der Biegeprobe erfolgt.

Dass die erste Schwingungsmode der Biegeprobe vor der Querschnittsänderung und die zweite Schwingungsmode der Biegeprobe nach der Querschnittsänderung einander entsprechen soll insbesondere bedeuten, dass die Modenart der ersten Schwingungsmode mit der Modenart der zweiten Schwingungsmode übereinstimmt. Typischerweise haben die erste Schwingungsmode und die zweite Schwingungsmode zudem dieselbe Ordnung in den jeweiligen Biegeschwingungsspektren (Amplitude als Funktion der Frequenz) vor und nach der Formänderung. Insbesondere kann die Nummer der Eigenfrequenz im nach Frequenzen geordneten jeweiligen Frequenzspektrum übereinstimmen.

Die Formulierung "Zeitpunkt, bei dem eine Querschnittsänderung der Biegeprobe einsetzt", wie sie vorliegenden verwendet wird, soll den Begriff des "Zeitpunktes der Rissinitiierung" umfassen.

Eine Einschnürung des Probenquerschnittes infolge plastischer Verformung der Probe ohne Rissbildung / Risswachstum wird in diesem Kontext als Querempfindlichkeit des Verfahrens gegen Einschnürung betrachtet bzw. hingenommen.

Das Verfahren zur dynamischen Belastungsprüfung macht sich zunutze, dass sich Charakteristiken von Biegungsschwingungsmoden wie Resonanzfrequenzen auf Grund der Querschnittsänderung der Biegeprobe während des dynamischen Belastens ändern.

Betrachtet man dazu exemplarisch eine stabförmige Rechteckprobe als angeregten freien rechteckigen Stabschwinger, so bestimmt sich dessen Trägheits-

$$K = \frac{d}{\sqrt{12}}.$$

radius K bei gegebener Dicke d zu Da die Grundfrequenz und die Frequenzen der Oberwellen jeweils proportional zum Trägheitsradius K sind, führt eine Reduktion der Dicke d zu einer linearen Verringerung der Biegeschwingungseigenfrequenzen. Beispielsweise erhält man für eine ideale Modelgeometrie (rechteckiges Ligament) einer freischwingenden gusseisernen Standartbiegeprobe (SE(B)-Probe) für eine typische Querschnittsänderung von 2 mm gut detektierbare Resonanzfrequenzverschiebungen um -98 Hz beim ersten Teilton, um -272 Hz beim zweiten Teilton, um -533 Hz beim dritten Teilton, usw.. Dementsprechend sind auch bei einer Querschnittsänderung einer realen Biegeprobe Frequenzverschiebungen der Eigenschwingungen (typischerweise Frequenzerniedrigungen auf Grund des sich reduzierenden effektiven Dicke) im Biegeschwingungsspektrum zu erwarten. Außerdem kann auch die Dämpfung über die Änderung der Eigenkreisfrequenz bei einer sprunghaften Querschnittsänderung der Biegeprobe beeinflusst werden. Die sich ändernde Geometrie bzw. damit korrelierter Parameter (wie Trägheitsradius bzw. Flächenträgheitsmoment) während des dynamischen Belastens führt auch zu entsprechenden Signaturen im zeitabhängigen Signal, das bspw. eine Dehnung der Biegeprobe als Funktion der Zeit, eine Durchbiegung der Biegeprobe als Funktion der Zeit oder auch eine Biegekraft als Funktion einer Zeit sein kann.

Ein Vergleich von Biegeschwingungsspektren bzw. Schwingungsmoden vor und nach dem dynamischen Belasten, ermöglicht daher prinzipiell die Berechnung von einem oder mehreren Filterparametern für die digitale Filterung zur Analyse des zeitabhängigen Signals. Auf diese Weise kann sehr effektiv nach den Signaturen der Querschnittsänderung im zeitabhängigen Signal gesucht werden, da die Analyse bspw. auf interessante Frequenzbänder eingeschränkt werden kann. Im Ergebnis lässt sich so der Zeitpunkt, bei dem eine Querschnittsänderung der Biegeprobe während des dynamischen Belastens einsetzt zuverlässig, schnell und genau bestimmen und zwar auch zeitlich nach der dynamischen Belastungsprüfung, allein unter Zuhilfenahme der aufgezeichneten, relevanten Messsignale. Letztlich können damit bruchmechanische Kennwerte konservativer und somit sicherer ermittelt werden.

Dabei hat es sich als besonders effektiv herausgestellt, ein oder mehrere Schwingungsmodenpaare zum Bestimmen des Filterparameters bzw. der Filterparameter zu verwenden.

Zwar kann das Schwingungsmodenpaar rein aus experimentellen Daten gewonnen werden, z.B. durch eine experimentelle Modalanalyse umfassend die folgenden Schritte:

- Messen und Registrieren eines ersten Schwingungssignals durch Anschlagen der Biegeprobe vor dem dynamischen Belasten/ der Querschnittsänderung;
- Bestimmen von ersten (gemessenen) Schwingungsmoden im ersten Schwingungssignal;
- Messen und Registrieren eines zweiten gemessenen Schwingungssignals durch Anschlagen der Biegeprobe nach dem dynamischen Belasten / der Querschnittsänderung;
- Bestimmen von zweiten (gemessenen) Schwingungsmoden im zweiten Schwingungssignal; und
- Auswählen des Schwingungsmodenpaares.

Allerdings können die Schwingungssignale, die typischerweise als Schwingungsspektren analysiert werden, selbst für relativ einfache Geometrien der Biegeprobe (Probekörper) relativ komplex sein. Außerdem hängen sie typischerweise von weiteren Randbedingungen, insbesondere der Lagerung und der Temperatur ab. Dadurch kann die Auswahl des relevanten Schwingungsmodenpaares erschwert werden.

Da es hinreichend genaue analytische Lösungen bzw. Näherungen der Schwingungsgleichungen nur für extrem einfache Biegeprobe wie einen zweiseitig aufgelegten oder freien Stab gibt, die zur Auswahl des Schwingungsmodenpaares herangezogen werden könnten, wird typischerweise eine numerische Simulation als Modalanalyse der Biegeprobe für die gegebenen experimentellen Randbedingungen beim dynamischen Belasten herangezogen.

Dazu kann das Schwingungsverhalten der Biegeprobe mittels jeweiliger numerischer Simulation, bspw. jeweiliger FEM-Simulation (Modalanalyse) der Biegeprobe bestimmt werden. Dies erlaubt eine zuverlässige Klassifikation der Moden und Zuordnung von Schwingungsmodenpaaren bzw. Auswahl eines Schwingungsmodenpaares, aus dessen Entwicklung während des dynamischen Belastens der Zeitpunkt, bei dem eine Querschnittsänderung der Biegeprobe während des dynamischen Belastens einsetzt, über ein digitales Filtern des zeitabhängigen Signals sehr zuverlässig und genau bestimmt werden kann.

Dementsprechend kann das Bestimmen des Schwingungsmodenpaares die folgenden Schritte aufweisen:

- Numerisches Bestimmen von ersten erwarteten Schwingungsmoden für die Biegeprobe vor dem dynamischen Belasten / der Querschnittsänderung;
- Numerisches Bestimmen von zweiten erwarteten Schwingungsmoden für die Biegeprobe nach dem dynamischen Belasten / der Querschnittsänderung;
- Vergleichen der ersten erwarteten Schwingungsmoden mit den zweiten erwarteten Schwingungsmoden; und
- Auswahl einer der ersten erwarteten Schwingungsmoden und einer der zweiten erwarteten Schwingungsmoden als Schwingungsmodenpaar.

Durch einen Vergleich der erwarteten Schwingungsmoden mit den gemessenen Schwingungsmoden kann eine noch höhere Zuverlässigkeit und/oder Genauigkeit erzielt werden, bspw. dadurch, dass in einem iterativen Verfahren Güte der numerischen Simulation erhöht wird bzw. die Modellparameter genauer angepasst werden.

Dementsprechend kann das Bestimmen des Schwingungsmodenpaares auch einen oder mehrere der folgenden Schritte aufweisen:

- Vergleichen der ersten erwarteten Schwingungsmoden mit den ersten gemessenen Schwingungsmoden;
- Erneutes numerisches Bestimmen der ersten erwarteten Schwingungsmoden;
- Vergleichen der zweiten erwarteten Schwingungsmoden mit den zweiten gemessenen Schwingungsmoden; und
- Erneutes numerisches Bestimmen der zweiten erwarteten Schwingungsmoden.

Da die dynamischen Belastungen in relativ kurzen Zeiträumen (impulsartige Belastung) von bspw. maximal 20 ms, oder sogar von maximal 10 ms erfolgen können, werden die Schwingungsmodenänderung typischerweise für Oberschwingungen (Oberwellen) im kHz bestimmt und das zeitabhängige Signal und die Schwingungsspektren mit einer Rate (Abtastrate) von zumindest 500 kHz von zumindest 1 MHz oder sogar zumindest 2 MHz gemessen und registriert.

Da die Dauer der dynamischen Belastungsprüfungen neben der Belastungsbeträge und Belastungsdynamik auch stark von der Antwort der Biegeprobe, insbesondere dessen Grundschwingungsfrequenz (Trägheit, Geometrie und Material) abhängt, die für entsprechend große Prüfkörper auch Werte bis etwa 500 Hz oder sogar darunter erreichen kann, kann die Abtastrate aber auch Werte im Bereich von 1 kHz bis 1 MHz annehmen.

Bei den dynamischen Belastungen können Kräfte von mindestens 5 kN oder sogar von mindestens 50 kN auf die Biegeprobe wirken.

Typischerweise werden zum Messen des ersten Schwingungssignals, zum Messen des zeitabhängigen Signals und/oder zum Messen des zweiten Schwingungssignals ein gemeinsamer Sensor, z.B. ein schwingungsproportionaler Sensor, im Folgenden auch als DMS (**D**ehnungs**mess**streifen, engl. strain gauges) bezeichnet, verwendet. Dies vereinfacht zum einen dem Aufbau und zum anderen die Vergleichbarkeit der Messungen. Es können natürlich auch mehrere gemeinsame Sensoren zur Messung der Signale verwendet werden, z.B. eine DMS-Vollbrücke und /oder eine DMS-Halbbrücke und /oder ein Einzel-DMS.

Um eine möglichst definierte Rissbildung während des dynamischen Belastens zu ermöglichen, kann vor dem Messen und Registrieren des zeitabhängigen Signals eine Kerbe oder Kerbung ("Sollbruchstelle") in der Biegeprobe erzeugt und ggf. ein Ermüdungsriss eingeschwungen werden. Um eine möglichst hohe Messgenauigkeit zu erzielen wird kann der Sensor (Nahfeld-DMS typischerweise als Einzel-DMS) typischerweise auf bzw. an der Biegeprobe und noch typischer nahe der Kerbe angebracht werden, z.B. in einer Entfernung von maximal 10 mm oder sogar von maximal 5 mm.

Typischerweise wird das Verfahren als Dreipunktbiegeversuch durchgeführt, d.h. vor dem dynamischen Belasten wird die Biegeprobe an zwei Stellen, z.B. Endabschnitten, linienartig aufgelagert bzw. sogar fixiert. Beispielsweise kann die Biegeprobe an 2 Linien gelagert und an einer dritten Linie belastet werden (3L-Lagerung).

Alternativ oder ergänzend dazu kann das dynamische Belasten bei einer 2L-Lagerung und/oder einer ff-Lagerung erfolgen. Bei einer 2L-Lagerung ruht die Probe auf zwei Linien und wird nicht von einer dritten Linie belastet. Diese Lagerung tritt typischerweise dann auf, wenn das Belastungswerkzeug (Prüfstempel, Finne) nach dem initialem, impulsartigen Belasten keinen Kontakt mehr zur Biegeprobe hat. Eine ff-Lagerung tritt auf wenn die Probe infolge von auftretenden Biegeschwingungen von den zwei Auflagerlinien während der dynamischen Belastungsprüfung abhebt und das Belastungswerkzeug (Prüfstempel, Finne) keinen Kontakt zur Biegeprobe hat.

Das Bestimmen des mindestens einen Filterparameters kann einen der folgenden Schritte aufweisen:

- Bestimmen einer ersten unteren Filterfrequenz die kleiner als eine Resonanzfrequenz der ersten Schwingungsmode ist;

- Bestimmen einer zweiten unteren Filterfrequenz die kleiner als eine Resonanzfrequenz der zweiten Schwingungsmode ist;
- Bestimmen einer ersten oberen Filterfrequenz die größer als die Resonanzfrequenz der ersten Schwingungsmode ist;
- Bestimmen einer zweiten oberen Filterfrequenz die größer die Resonanzfrequenz der zweiten Schwingungsmode ist.

Beispielsweise kann die jeweilige untere Filterfrequenz in einem Bereich von 90% bis 99,95%, typischer in einem Bereich von 98% bis 99,9% der Resonanzfrequenz der ersten Schwingungsmode bzw. der Resonanzfrequenz der zweiten Schwingungsmode liegen, und die jeweilige obere Filterfrequenz in einem Bereich von 100,05% bis 110%, typischer in einem Bereich von 101,1 % bis 102% der Resonanzfrequenz der ersten Schwingungsmode bzw. der Resonanzfrequenz der zweiten Schwingungsmode liegen. Beispielsweise können die Paare von unterer Filterfrequenz und oberer Filterfrequenz einen relativ engen Frequenzbereich von maximal 200 Hz, maximal 100 Hz oder sogar nur maximal 50 Hz definieren, wenn die Resonanzfrequenz der ersten Schwingungsmode und die Resonanzfrequenz der zweiten Schwingungsmode in einem Bereich von 500 Hz bis 50 kHz, typischer 1 kHz bis 25 kHz liegt.

Das anschließende digitale Filtern kann dann die folgenden Schritte aufweisen:

- Filtern des zeitabhängigen Signals mit einem Bandpass-Filter (typischerweise mit einem IIR-Bandpass-Filter bzw. einem IIR-Bandpassfilter, d.h. mit einem entsprechenden Filter unendlicher Impulsantwort, von englisch "infinite impulse response filter", noch typischer mit einem IIR-Bandpass-Filter mit erzwungener Nullphasigkeit) mit der ersten unteren Filterfrequenz und der ersten oberen Filterfrequenz als Filterparameter (Grenzfrequenzen) zum Bilden eines ersten Filtrats;
- Gleichrichten des ersten Filtrats zum Bilden eines gleichgerichteten ersten Filtrats; und
- Bestimmen des Zeitpunktes, bei dem eine Querschnittsänderung der Biegeprobe während des dynamischen Belastens einsetzt, im gleichgerichteten ersten Filtrat, insbesondere als Zeit, bei der das gleichgerichtete erste Filtrat ein erstes lokales Minimum aufweist.

Alternativ oder ergänzend kann das digitale Filtern auch die folgenden Schritte aufweisen:

- Filtern des zeitabhängigen Signals mit einem Bandpass-Filter (typischerweise mit einem IIR-Bandpass-Filter bzw. einem IIR-Bandpassfilter) mit der zweiten unteren Filterfrequenz und der zweiten oberen Filterfrequenz als Filterparameter (Grenzfrequenzen) zum Bilden eines zweiten Filtrats; und

- Gleichrichten des zweiten Filtrats zum Bilden eines gleichgerichteten zweiten Filtrats;
- Bestimmen des Zeitpunktes im gleichgerichteten zweiten Filtrat.

Typischerweise wird damit zum Bilden eines Bandpassfiltrats das zeitabhängige Signal mit einem Bandpass-Filter gefiltert, wobei die Grenzen eines Frequenzintervalls als Filterparameter verwendet werden, derart, dass das Frequenzintervall mindestens eine der Resonanzfrequenzendes Schwingungsmodenpaares enthält. Nach einem Gleichrichten des Bandpassfiltrats kann dann durch Analysieren des gebildeten gleichgerichteten Bandpassfiltrats der Zeitpunkt bestimmt werden, bei dem eine Querschnittsänderung der Biegeprobe während des dynamischen Belastens einsetzt. Im Folgenden wird dieser Zeitpunkt auch als Änderungszeitpunkt bezeichnet.

Nach dem der Änderungszeitpunkt bestimmt wurde, kann die auf die Biegeprobe zum Änderungszeitpunkt wirkenden Kraft bestimmt werden, was sich besonders einfach gestaltet, wenn das zeitabhängige Signal eine kalibrierte zeitabhängige Kraft ist. Aus diesem Wert können dann bruchmechanische Materialkennwerte wie die dynamische Bruchzähigkeit $k_{Id}$ oder das J-Integral $J_{di}$ bestimmt werden.

Außerdem kann ein Betrag einer Durchbiegung der Biegeprobe zum Änderungszeitpunkt $t_q$ bestimmt werden.

Weiterhin kann eine beim dynamischen Belasten an der Biegeprobe vom zum Zeitpunkt $t_0$ des Beginns des dynamischen Belastens bis zum Zeitpunkt $t_q$ verrichtete Biegearbeit W durch numerische Integration der auf die Biegeprobe wirkenden Kraft F über der Durchbiegung w als

$$W = \int_{t_0}^{t_q} F(w(t))dw$$

ermittelt werden.

Gemäß einem Ausführungsbeispiel weist eine Vorrichtung zur dynamischen Belastungsprüfung eine Probenaufnahme zur Lagerung einer Biegeprobe, eine Belastungsvorrichtung, die eingerichtet ist, die in der Probenaufnahme gelagerte Biegeprobe mit einer Biegekraft dynamisch zu belasten, einen Sensor, der eingerichtet ist eine Messgröße zu messen, die mit einer Formänderung der in der Probenaufnahme gelagerten Biegeprobe korreliert ist, und eine Steuer- und Auswerteeinheit, die mit der Belastungsvorrichtung und dem Sensor gekoppelt ist, auf. Die Steuer- und Auswerteeinheit ist eingerichtet, die Biegeprobe mittels der Belastungsvorrichtung dynamisch mit der Biegekraft zu belasten und dabei die Messgröße als ein zeitabhängiges Signal zu registrieren, ein Schwingungsmodenpaar umfassend eine erste Schwingungsmode der Biegeprobe vor dem dynamischen Belasten und eine der ersten Schwingungsmode entsprechenden zweiten Schwingungsmode der Biegeprobe nach dem dynamischen Belasten zum Bestimmen mindestens eines Filterparameters zu verwenden, und das zeitabhängige Signals unter Verwendung des mindestens einen Filterparameters zu filtern, typischerweise digital zu filtern, um einen Zeitpunkt, bei dem eine Querschnittsänderung der Biegeprobe während des dynamischen Belastens einsetzt, zu bestimmen.

Mit dieser Prüfvorrichtung lassen sich bruchmechanische Kennwerte deutlich konservativer und somit sicherer ermittelt als dies bei bekannten dynamischen Belastungsprüfvorrichtungen möglich ist.

Typischerweise weist die Belastungsvorrichtung ein geführtes Fallwerk oder ein Pendelschlagwerk auf. Damit lassen sich besonders definierte dynamische Belastungsprüfungen vornehmen. Die Belastungsvorrichtung kann aber auch ein freies Fallwerk aufweisen.

Als Prüfstempel der Belastungsvorrichtung kann ein Stempel oder eine Finne, instrumentiert mit DMS der/die das Mitregistrieren der eingeleiteten Energie während des dynamischen Belastens erlaubt oder uninstrumentiert verwendet werden.

Als Werkzeug / Belastungsvorrichtung für die experimentelle Modalanalyse kann ein Hammer, insbesondere ein Modalhammer verwendet werden, der das Mitregistrieren der eingeleiteten Schlagenergie während des dynamischen Belastens erlaubt. Dies vereinfacht bspw. die Analyse einer Peakhöhenänderung während des dynamischen Belastens zur experimentellen Modalanalyse.

Typischerweise ist die Vorrichtung eingerichtet, dynamische Dreipunktbiege-Belastungsprüfung an der Biegeprobe vorzunehmen. Dazu weist sie zwei Auflagen auf, auf denen die Biegeprobe (im Folgenden auch als Prüfling bezeichnet) positioniert werden kann und die so zur Belastungsvorrichtung angeordnet sind, dass deren Prüfstempel (Finne) die Biegeprobe in der Mitte belasten kann.

Als Sensor wird typischerweise ein durchbiegungsschwingungsproportionaler Sensor (DMS) verwendet. Außerdem kann die Vorrichtung einen kalibrierbaren Kraftsensor, z.B. in Form einer DMS-Vollbrücke mit vier weiteren DMS, eine DMS-Halbbrücke mit zwei weiteren DMS oder einen Einzel-DMS aufweisen. Dies ermöglicht eine einfache Bestimmung der zum Änderungszeitpunkt auf die Biegeprobe wirkenden Kraft (Biegekraft).

Als Sensor kann auch die DMS-Vollbrücke verwendet werden. Mit einem an der Biegeprobe und in der Nähe der erwarteten Rissbildung angebrachten Einzel-DMS (Nahfeld-DMS) als primärer Sensor ist aber eine höhere Empfindlichkeit zu erwarten.

Als Sensor sind auch berührungslose Schwingungs-/bzw. Wegmess-Sensoren, z.B. optische Sensoren, mit möglichst geringe Querempfindlichkeit gegen Probenverlagerung einsetzbar.

Typischerweise hat der Sensor eine Abtastrate von zumindest 1 kS/s ($10^3$ sample/s, 1 kHz) oder sogar von zumindest 1 MS/s ($10^6$ sample/s, 1 MHz).

Gemäß einem Ausführungsbeispiel umfasst ein Verfahren zur dynamischen Belastungsprüfung ein Bestimmen eines ersten Schwingungsspektrums einer Biegeprobe, ein dynamisches Belasten der Biegeprobe sowie ein Messen und Registrieren eines zeitabhängigen Signals während des dynamischen Belastens, wobei das zeitabhängige Signal mit einer Formänderung der Biegeprobe korreliert ist, und ein Bestimmen eines zweiten Schwingungsspektrums der Biegeprobe nach dem dynamischen Belasten. Das Verfahren umfasst weiter das Bestimmen mindestens eines Filterparameters, umfassend Vergleichen des ersten Schwingungsspektrums mit dem zweiten Schwingungsspektrum; und ein digitales Filtern des zeitabhängigen Signals unter Verwendung des mindestens einen Filterparameters zum Bestimmen eines Zeitpunktes, bei dem eine Querschnittsänderung der Biegeprobe während des dynamischen Belastens einsetzt.

Das Bestimmen des ersten Biegeschwingungsspektrums umfasst typischerweise die Schritte des Messens und Registrierens eines ersten zeitabhängigen Biegeschwingungssignals der Biegeprobe vor dem dynamischen Belasten und ein Erzeugen des ersten Schwingungsspektrums aus dem ersten zeitabhängigen Schwingungssignal. Das Erzeugen des ersten Schwingungsspektrums aus dem ersten zeitabhängigen Schwingungssignal erfolgt typischerweise mittels einer diskreten Fourier-Transformation (DFT), noch typischer mittels einer schnellen Fourier-Transformation (im Folgenden auch als FFT bezeichnet, von englisch "fast Fourier transform").

Analog dazu umfasst das Bestimmen des zweiten Schwingungsspektrums typischerweise die Schritte des Messens und Registrierens eines zweiten zeitabhängigen Schwingungssignals der Biegeprobe nach dem dynamischen Belasten und ein Erzeugen des zweiten Schwingungsspektrums aus dem zweiten zeitabhängigen Schwingungssignal. Das Erzeugen des zweiten Schwingungsspektrums aus dem zweiten zeitabhängigen Schwingungssignal erfolgt typischerweise wieder mittels einer diskreten Fourier-Transformation (DFT), noch typischer mittels FFT.

Typischerweise wird beim Vergleichen des ersten Schwingungsspektrum und zweiten Schwingungsspektrums eine Schwingungsmodenänderung bestimmt.

Bei der Schwingungsmodenänderung kann es sich um eine Resonanzverschiebung, einen Peakshift, eine Resonanzfrequenzbandverschiebung, eine Modenaufspaltung, eine Modenverschmelzung, ein Verschwinden einer Mode und/oder eine Änderung einer Peakhöhe (Amplitudenänderung bei einer Resonanzfrequenz) einer Schwingungsmode (Durchbiegungsschwingungscharakteristik) handeln.

Das Bestimmen des mindestens einen Filterparameters umfasst typischerweise die Schritte des Bestimmen einer Resonanzfrequenz (z.B. eines entsprechenden Frequenzpeaks) einer Schwingungsmode im ersten Schwingungsspektrum als einen ersten Filterparameter, und das Bestimmen einer weiteren Resonanzfrequenz (z.B. eines entsprechenden Frequenzpeaks) einer Schwingungsmode im zweiten Schwingungsspektrum als einen zweiten Filterparameter, wobei die weitere Resonanzfrequenz verschieden, z.B. kleiner als die Resonanzfrequenz der Schwingungsmode im ersten Schwingungsspektrum ist. Beispielsweise können die Frequenzen einer jeweiligen k-ten Oberschwingung vor und nach dem dynamischen Belasten als erster bzw. zweiter Filterparameter für die digitale Filterung verwendet werden.

Gemäß einem Ausführungsbeispiel weist eine Vorrichtung zur dynamischen Belastungsprüfung eine Probenaufnahme zur Lagerung einer Biegeprobe, eine Belastungsvorrichtung, die eingerichtet ist, die in der Probenaufnahme gelagerte Biegeprobe mit einer Biegekraft dynamisch zu belasten, einen Sensor, der eingerichtet ist eine Messgröße zu messen, die mit einer Formänderung der in der Probenaufnahme gelagerten Biegeprobe korreliert ist, und eine Steuer- und Auswerteeinheit, die mit der Belastungsvorrichtung und dem Sensor gekoppelt ist, auf. Die Steuer- und Auswerteeinheit ist eingerichtet, die Messgröße während einer ersten Schwingung der Biegeprobe als ein erstes zeitabhängiges Schwingungssignal zu registrieren und aus dem ersten zeitabhängigen Schwingungssignal ein erstes Schwingungsspektrum zu erzeugen, die Biegeprobe mittels der Belastungsvorrichtung dynamisch mit der Biegekraft zu belasten und dabei die Messgröße als ein zeitabhängiges Signal zu registrieren, die Messgröße während einer zweiten Schwingung der Biegeprobe als ein zweites zeitabhängiges Schwingungssignal zu registrieren und aus dem zweiten zeitabhängigen Schwingungssignal ein zweites Schwingungsspektrum zu erzeugen, zur Bestimmung mindestens eines Filterparameters das erste Schwingungsspektrum mit dem zweiten Schwingungsspektrum zu vergleichen; und zur Bestimmung eines Zeitpunktes, bei dem eine Querschnittsänderung der Biegeprobe während des dynamischen Belastens einsetzt, das zeitabhängige Signals unter Verwendung des mindestens einen Filterparameters digital zu filtern.

Weitere vorteilhafte Ausgestaltungen, Einzelheiten, Aspekte und Merkmale der vorliegenden Erfindung ergeben sich aus den Unteransprüchen, der Beschreibung sowie den beigefügten Zeichnungen. Darin zeigt:

Fig. 1 eine Vorrichtung zur dynamischen Belastungsprüfung einer Biegeprobe gemäß einem Ausführungsbeispiel;

Fig. 2 eine Vorrichtung in Anordnung zur Durchführung eines Hammertests an einer Biegeprobe gemäß einem Ausführungsbeispiel;

Fig. 3 einen schematischen Querschnitt einer Biegeprobe nach einer dynamischen Belastung in einer Vorrichtung gemäß Fig. 1 oder Fig. 2;

Fig. 4 ein Schwingungsspektrum einer Biegeprobe vor einem dynamischen Belasten der Biegeprobe und ein zweites Schwingungsspektrum der Biegeprobe nach dem dynamischen Belasten der Biegeprobe gemäß einem Ausführungsbeispiel für kleine relative Querschnittsänderungen;

Fig. 5 ein erstes Schwingungsspektrum einer Biegeprobe vor einem dynamischen Belasten der Biegeprobe und ein zweites Schwingungsspektrum der Biegeprobe nach dem dynamischen Belasten der Biegeprobe gemäß einem Ausführungsbeispiel für eine größere relative Querschnittsänderung;

Fig. 6 Schritte eines Verfahrens zur dynamischen Belastungsprüfung gemäß einem Ausführungsbeispiel;

Fig. 7 Schritte eines Verfahrens zur dynamischen Belastungsprüfung gemäß einem Ausführungsbeispiel;

Fig. 8 Schritte eines Verfahrens zur dynamischen Belastungsprüfung gemäß einem Ausführungsbeispiel;

Fig. 9 einen schematischen Querschnitt einer SE(B)-Probe nach einer dynamischen Belastung in einer Vorrichtung gemäß Fig. 1 oder Fig. 2;

Fig. 10 den in Fig. 9 gezeigten Querschnitt der SE(B)-Probe in diskretisierter Form gemäß einem Ausführungsbeispiel;

Fig. 11 eine perspektivische Ansicht der in Fig. 10 gezeigten SE(B)-Probe als CAD-Geometrie vor der dynamischen Belastung gemäß einem Ausführungsbeispiel;

Fig. 12 eine weitere perspektivische Ansicht der in Fig. 10 gezeigten SE(B)-Probe als CAD-Geometrie nach der dynamischen Belastung gemäß einem Ausführungsbeispiel;

Fig. 13 eine perspektivische Ansicht einer Schwingungsmode der in Fig. 11 dargestellten SE(B)-Probe als CAD-Geometrie gemäß einem Ausführungsbeispiel;

Fig. 14 eine perspektivische Ansicht einer weiteren Schwingungsmode der in Fig. 11 dargestellten SE(B)-Probe als CAD-Geometrie gemäß einem Ausführungsbeispiel;

Fig. 15 eine perspektivische Ansicht noch einer weiteren Schwingungsmode der in Fig. 11 dargestellten SE(B)-Probe als CAD-Geometrie gemäß einem Ausführungsbeispiel;

Fig. 16 eine perspektivische Ansicht einer Schwingungsmode der in Fig. 11 dargestellten SE(B)-Probe als CAD-Geometrie gemäß einem Ausführungsbeispiel;

Fig. 17 ein über einen jeweiligen Hammertest bestimmtes erstes Schwingungsspektrum einer SE(B)-Probe vor dem dynamischen Belasten (mit Original SE(B)-Probe der in Fig. 11 dargestellten diskretisierten SE(B)-Probe als CAD-Geometrie) und ein zweites Schwingungsspektrum der Biegeprobe nach dem dynamischen Belasten der Biegeprobe (mit Original SE(B)-Probe der in Fig. 12 dargestellten diskretisierten SE(B)-Probe als CAD-Geometrie) gemäß einem Ausführungsbeispiel;

Fig. 18 zwei Tabellen mit über Simulation bestimmten Charakteristiken von Moden der SE(B)-Probe vor dem dynamischen Belasten (mit der in Fig. 11 dargestellten SE(B)-Probe als CAD-Geometrie, linke Tabelle) und nach dem dynamischen Belasten (mit der in Fig. 12 dargestellten SE(B)-Probe als CAD-Geometrie, rechte Tabelle) für eine 3L-Lagerung gemäß einem Ausführungsbeispiel;

Fig. 19 zwei Tabellen mit über Simulation bestimmten Charakteristiken von Moden der SE(B)-Probe vor dem dynamischen Belasten (mit der in Fig. 11 dargestellten SE(B)-Probe als CAD-Geometrie, linke Tabelle) und nach dem dynamischen Belasten (mit der in Fig. 12 dargestellten SE(B)-Probe als CAD-Geometrie, rechte Tabelle) für ein 2L-Lagerung gemäß einem Ausführungsbeispiel;

Fig. 20 zwei Tabellen mit über Simulation bestimmten Charakteristiken von Moden der SE(B)-Probe vor dem dynamischen Belasten (mit der in Fig. 11 dargestellten SE(B)-Probe als CAD-Geometrie, linke Tabelle) und nach dem dynamischen Belasten (mit der in Fig. 12 dargestellten SE(B)-Probe als CAD-Geometrie, rechte Tabelle) für ein ff-Lagerung gemäß einem Ausführungsbeispiel;

Fig. 21 ein zeitabhängiges Signal, das während des dynamischen Belastens der in Fig. 11 und Fig. 12 diskretisiert dargestellten SE(B)-Probe ermittelt wurde, gemäß einem Ausführungsbeispiel;

Fig. 22 mittels FFT gewonnenes Spektrum des in Fig. 21 gezeigten zeitabhängigen Signals gemäß einem Ausführungsbeispiel;

Fig. 23 ein erstes aus dem in Fig. 21 gezeigten zeitabhängigen Signal mittels Bandpassfilterung erzeugten Filtrat gemäß einem Ausführungsbeispiel;

Fig. 24 ein zweites aus dem in Fig. 21 gezeigten zeitabhängigen Signal mittels Bandpassfilterung erzeugten Filtrat gemäß einem Ausführungsbeispiel;

Fig. 25 die in den Fig. 23 und 24 gezeigten zeitabhängigen Signal Filtrate als gleichgerichtete Filtrate gemäß einem Ausführungsbeispiel;

Fig. 26 die zeitliche Änderung eines der in Fig. 25 gezeigten gleichgerichteten Filtrate gemäß einem Ausführungsbeispiel;

Fig. 27 und Fig. 28 zeigen Kraftsignale der SE(B)-Probe mit der in Fig. 11 und Fig. 12 diskretisiert dargestellten Probengeometrie während des dynamischen Belastens, die mit einem Vollbrücken-DMS aufgezeichnet wurden, gemäß einem Ausführungsbeispiel;

Fig. 29 und Fig. 30 zeigen Kraftsignale einer SE(B)-Probe während des dynamischen Belastens, die für eine kleine Ligamentenquerschnittsänderung per Simulation erhalten wurde, gemäß einem Ausführungsbeispiel;

Fig. 31 und Fig. 32 zeigen Frequenzspektren des in den Figuren 29 und 30 dargestellten Kraftsignals gemäß einem Ausführungsbeispiel;

Fig. 33 ein Bandpassfiltrat des in den Figuren 29 und 30 dargestellten Kraftsignals gemäß einem Ausführungsbeispiel;

Fig. 34 das Bandpassfiltrat aus Fig. 33 mit zusätzlichen Hüllkurven gemäß einem Ausführungsbeispiel;

Fig. 35 Hüllkurven-Splines gemäß einem Ausführungsbeispiel;

Fig. 36 eine gleichgerichtete Hüllkurve, die aus den in Fig. 35 gezeigten Hüllkurven-Splines berechnet wurde, gemäß einem Ausführungsbeispiel;

Fig. 37 eine zeitliche Ableitung der in Fig. 36 dargestellten gleichgerichtete Hüllkurve gemäß einem Ausführungsbeispiel;

Fig. 38 ein Kraftsignal einer SE(B)-Probe während des dynamischen Belastens, das mittels einer Simulation erhalten wurde, gemäß einem Ausführungsbeispiel;

Fig. 39 einen Ausschnitt des in Fig. 38 dargestellten Kraftsignals in Darstellung höherer zeitlicher Auflösung;

Fig. 40 und Fig. 41 zeigen Signalfiltrate, die aus den in den Figuren 38 bzw. 39 dargestellten Kraftsignalen berechnet wurden gemäß einem Ausführungsbeispiel;

Fig. 42 zeigt das Signalfiltrat der Figur 41 und ein Referenzsignal gemäß einem Ausführungsbeispiel;

Fig. 43 zeigt das Signalfiltrat der Figur 41 und das mit dem Signalfiltrat der Figur 41 synchronisierte Referenzsignal aus Figur 42 gemäß einem Ausführungsbeispiel;

Fig. 44 das Signalfiltrat der Figur 41 mit Hüllkurven gemäß einem Ausführungsbeispiel;

Fig. 45 das Signalfiltrat der Figur 41 sowie ein synchronisiertes und moduliertes Referenzsignal gemäß einem Ausführungsbeispiel;

Fig. 46 ein Differenzsignal, das aus dem Signalfiltrat der Figur 41 und dem synchronisierten und modulierten Referenzsignal der Figur 45 berechnet wurde, gemäß einem Ausführungsbeispiel;

Fig. 47 ein Signal eines Beschleunigungssensors (rechte Achse) und ein Signal eines NF-DMS (linke Achse) als Funktion der Zeit während des dynamischen Belastens einer SE(B)-Probe gemäß einem Ausführungsbeispiel;

Fig. 48 das mit dem Signal des NF-DMS synchronisierte Signal des Beschleunigungssensors gemäß einem Ausführungsbeispiel;

Fig. 49 einen Ausschnitt des in Fig. 48 dargestellten synchronisierten Signals des Beschleunigungssensors mit höherer zeitlicher Auflösung;

Fig. 50 ein aus dem synchronisierten Signal des Beschleunigungssensors der Fig. 49 durch digitales Filtern erzeugtes Schwellenwertfiltrat gemäß einem Ausführungsbeispiel;

Fig. 51 das Schwellenwertfiltrat der Fig. 50 sowie eine aus dem Signal des Beschleunigungssensors der Fig. 49 berechnete Geschwindigkeit (rechte Achse) gemäß einem Ausführungsbeispiel; und

Fig. 52 einen Ausschnitt der in Fig. 51 dargestellten Größen mit höherer zeitlicher Auflösung.

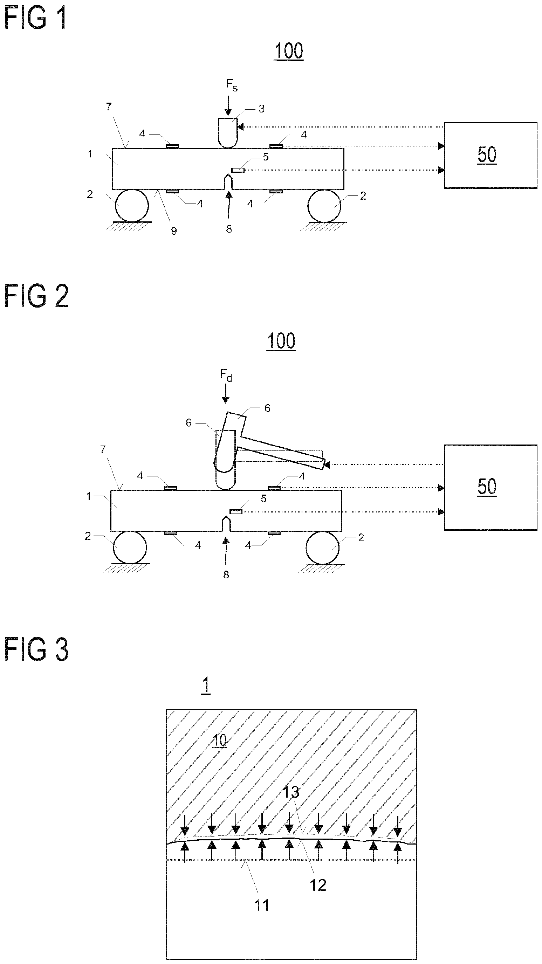

Fig. 1 zeigt eine Vorrichtung 100 zur dynamischen Belastungsprüfung einer Biegeprobe 1 in einer schematischen Seitenansicht. In dem exemplarischen Ausführungsbeispiel ist die Vorrichtung 100 zur Durchführung von Dreipunktbiegeversuchen eingerichtet. Dazu kann die Biegeprobe 1 mit ihrer Unterseite 9 auf zylindrischen Walzen 2 einer Probenaufnahme gelagert werden, beispielsweise so, dass die Biegeprobe 1 frei aufliegend ruht, und danach an ihrer gegenüberliegenden Oberseite 7 durch ein z.B. halbzylindrisches Werkzeug 3 einer Belastungsvorrichtung wie eine Finne oder Stempel mit einer Biegekraft $F_s$ belastet werden kann.

Bei der in Fig. 1 dargestellten exemplarischen Biegeprobe 1 handelt es sich um eine stabförmige Dreipunkt-Biegeprobe mit rechteckigem Querschnitt und einer Kerbung 8 an der Unterseite 9, d.h. um eine Dreipunkt-Biegeprobe ohne Seitenkerbung (SE(B)-Probe).

Die Kerbung 8 ermöglicht zum einen als Querschnittsänderung die Kräfte für die Prüfmaschine während des dynamischen Belastens zu verringern und zum anderen dem Risswachstum eine gewisse Vorzugsrichtung zu geben. Ein Sensor 5 zur Messung einer Messgröße, die mit einer Formänderung der gelagerten Biegeprobe 1 korreliert ist, ist nahe der Kerbung 8 appliziert und damit nahe zum Ort der Querschnittsänderung angebracht.

Bei dem Sensor 5 handelt es sich typischerweise um einen durchbiegungsschwingungsproportionalen Sensor (Einzel-DMS bzw. Einzel-DMS).

Der Sensor 5 und die Belastungsvorrichtung können mit einer Steuer- und Auswerteeinheit 50 verbunden sein. Wie durch die gestrichelten Pfeile in Fig. 1 dargestellt wird, kann die Steuer- und Auswerteeinheit 50 vom Sensor 5 ermittelte Signale registrieren uns zudem die Belastungsvorrichtung steuern bzw. die Steuerung der Belastungsvorrichtung agiert auch unabhängig vom Signal des Sensor 5.

In dem exemplarischen Ausführungsbeispiel ist die Steuer- und Auswerteeinheit 50 zudem mit vier weiteren eine Brücke bildende DMS 4 (DMS-Vollbrücke) zur Kraftmessung gekoppelt.

Typischerweise werden jeweils zwei der DMS 4 auf bzw. an der Unterseite 9 und auf bzw. an der Oberseite 7 angeordnet.

Diese Anordnung ermöglicht auf Grund der guten Synchronität der Signale des Sensors 5 und der DMS-Vollbrücke 4 eine zuverlässige Kalibrierung / Umrechnung des während des dynamischen Belastens vom Sensor 5, im Folgenden auch als Nahfeld-DMS oder kurz NF-DMS bezeichnet, gemessenen Messsignals. Dazu kann die Biegeprobe nach dem Auflagern zunächst mittels der Belastungsvorrichtung (Finne 3) (quasistatisch) unterschiedlichen Kräften sicher unterhalb der erwarteten Streckgrenze ausgesetzt und dabei zur Bestimmung einer Kalibrierungskurve oder eines Kalibrierungsfaktors die Signale der DMS-Vollbrücke 4 registriert werden.

Weiterhin kann die in Figur 1 dargestellte Vorrichtung 100 zur dynamischen Belastungsprüfung verwendet werden. Dabei kann das an eine Fallmasse (hier nicht eingezeichnet) spielfrei befestigte Werkzeug 3 der Belastungsvorrichtung (Finne oder Stempel) senkrecht über der Biegeprobe angehoben und zur dynamischen Belastungsprüfung dann annähernd momentenfrei auf die Biegeprobe fallengelassen werden. Dadurch wird die Biegeprobe 1 schlag-bzw. impulsartig mit einer Kraft $F_S$ belastet die von der DMS-Vollbrücke elektronisch aufgezeichnet wird.

Eine derartige dynamische Belastungsprüfung, die häufig auch als "low-blow impact test" bzw. "low-blow test" bezeichnet wird, kann mit einem geführten Fallwerk, einem freien Fallwerk oder einem Pendelschlagwerk der Belastungseinrichtung ausgeführt werden. Während des dynamischen Belastens kann die Steuer- und Auswerteinheit 50 ein Signal des Sensors 5 und/oder ein Signal der DMS-Vollbrücke 4 als ein jeweiliges zeitabhängiges Signal registrieren.

Fig. 2 zeigt die Vorrichtung 100 in der Anordnung zur Durchführung eines Hammertests. Dabei wird die Biegeprobe 1 durch impulsartige Anregung (Anschlagen) mit einem Hammer oder Modalhammer 6 mit der Kraft $F_d$ belastet und zum Schwingen angeregt. Diese mechanischen Schwingungen können als Longitudinal-, Transversal und Torsionsschwingungen auftreten. Im Folgenden werden diese als Schwingungen und deren Spektren auch als Schwingungsspektren bezeichnet.

Von der Steuer- und Auswerteinheit 50 wird während der Biegeschwingung ein Signal des Sensors 5 und/oder ein Signal der DMS-Vollbrücke 4 als eine Biegeschwingung bzw. als Biegeschwingungsspektrum registriert.

Mittels Hammertests an der ungeprüften Biegeprobe vor der dynamischen Belastungsprüfung kann eine erste Biege-, Torsions- oder Longitudinalschwingung bzw. ein erstes Schwingungsspektrum der Biegeprobe registriert werden.

Mittels Hammertests an der geprüften Biegeprobe nach der dynamischen Belastungsprüfung kann eine zweite Biege-, Torsions- oder Longitudinalschwingung bzw. ein zweites Biegeschwingungsspektrum der Biegeprobe registriert werden.

Über ein Vergleichen des ersten Schwingungsspektrums mit dem zweiten Schwingungsspektrum kann die Steuer- und Auswerteinheit 50 mindestens einen Filterparameter berechnen und diesen für eine nachfolgende digitale Filterung des zeitabhängigen Signals zur Bestimmung des Zeitpunktes, bei dem eine Querschnittsänderung der Biegeprobe 1 einsetzt, verwenden.

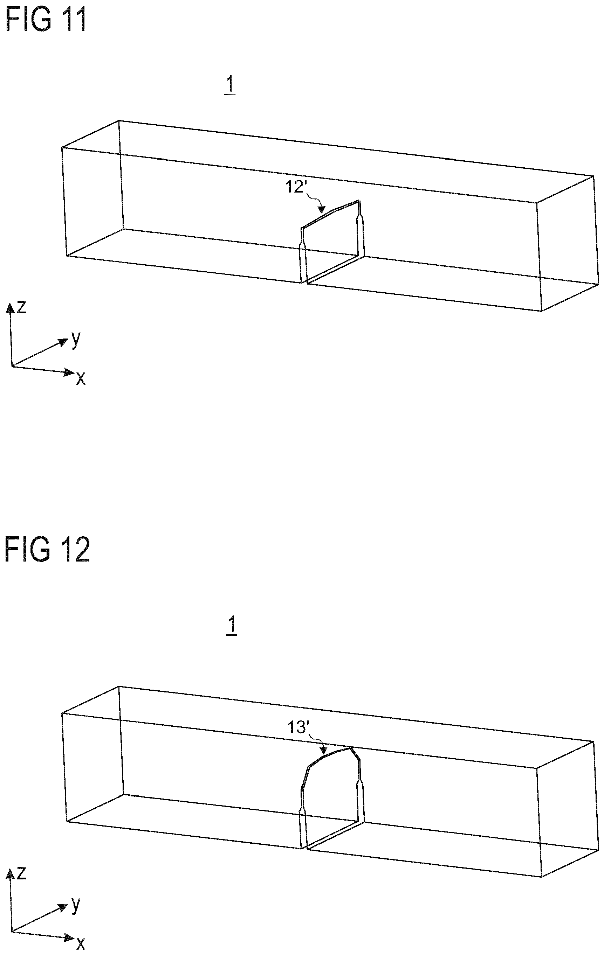

Typischerweise werden die Schwingungsspektren der Biegeprobe 1 jedoch nummerisch als erstes erwartetes Schwingungsspektrum (vor der dynamischen Belastung) und zweites erwartetes Schwingungsspektrum (nach der dynamischen Belastung) bestimmt. Mittels eines Vergleichs der beiden erwarteten Schwingungsspektren kann dann ein Schwingungsmodenpaar bestimmt werden. Die dabei typischerweise von der Steuer- und Auswerteinheit 50 ausgeführten (durchführbaren) Schritte werden unten mit Bezug zu Fig. 11 bis Fig. 20 detailliert erläutert.

Es kann jedoch vorgesehen sein, die erwarteten Schwingungsspektren mit den gemessenen zu vergleichen, um die numerische Simulation zu verifizieren / validieren oder iterativ zu verbessern.

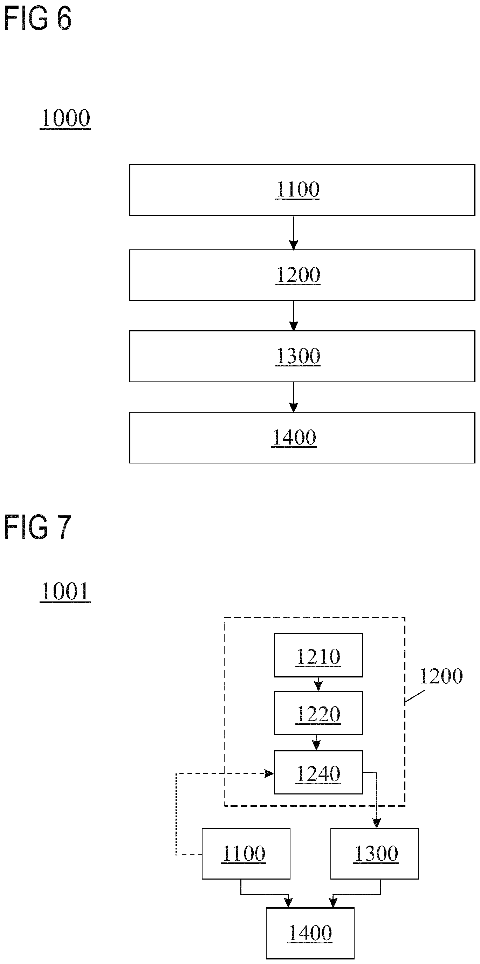

Typischerweise kann die Steuer- und Auswerteinheit 50 das bestimmte Schwingungsmodenpaar zum Bestimmen mindestens eines Filterparameters verwenden und mittels digitalem Filtern des zeitabhängigen Signals unter Verwendung des mindestens einen Filterparameters einen Zeitpunkt, bei dem eine Querschnittsänderung der Biegeprobe 1 während des dynamischen Belastens einsetzt, bestimmen, was mit Bezug zu den Figuren 6 bis 8 sowie 21 bis 52 detailliert erläutert wird.

Fig. 3 zeigt jedoch zunächst einen schematischen Querschnitt (Bruchfläche) der Biegeprobe 1 nach dem dynamischen Belasten in der Vorrichtung gemäß Fig. 1. Dabei stellen die Kurven 11, 12 und 13 das Ende 11 der mechanischen Kerbung, das Ende 12 eines feinen zusätzlichen Schwingungsanrisses und das Rissende 13 zu einem Restligament 10 nach dem dynamischen Belasten dar. Die an der Bruchfläche bestimmbare Querschnittsänderung durch das dynamische Belasten wird durch die Pfeile symbolisiert.

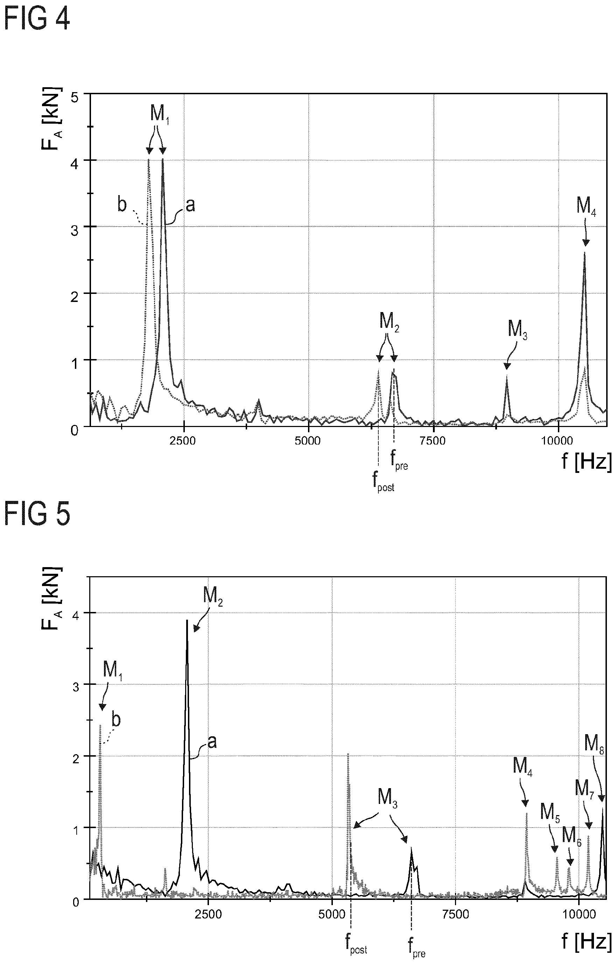

Fig. 4 zeigt ein erstes, mittels Hammertest gemessenes Schwingungsspektrum *a* einer gusseisernen SE(B)-Biegeprobe vor dem dynamischen Belasten und ein zweites Schwingungsspektrum *b* der Biegeprobe nach dem dynamischen Belasten für eine kleine relative Querschnittsänderung $\eta$ ($\eta \leq 4{,}5 \cdot 10^{-2}$). Die relative Querschnittsänderung $\eta$ ist dabei als Verhältnis zwischen der Ausgangsrisslänge $a_0$ und der Rissverlängerung $\Delta a$ definiert ($\eta = a_0/\Delta a$).

Beide Schwingungsspektren *a, b* sind als kalibrierte Kraftspektren (Amplitude der Kraft $F_A$ als Funktion der Frequenz) dargestellt, die mittels FFT aus zeitabhängigen Schwingungssignalen der SE(B)-Biegeprobe erhalten wurden. Auf die Darstellung der mittels eines NF-DMS gemessenen jeweiligen zeitabhängigen Schwingungssignale der SE(B)-Biegeprobe vor und nach dem dynamischen Belasten wird verzichtet.

Wie Fig. 4 entnommen werden kann, zeigen die jeweiligen korrespondierenden Schwingungsmoden $M_1$ und $M_2$ im ersten und zweiten Schwingungsspektrum *a, b* charakteristische Frequenzverschiebungen zu niedrigeren Frequenzen nach dem Belasten im zweiten Schwingungsspektrum *b* auf Grund des geringeren Querschnitts nach dem dynamischen Belasten. Außerdem gibt es eine korrespondierende Schwingungsmode $M_4$, deren Amplitude im zweiten Biegeschwingungsspektrum *b* deutlich geringer als im ersten Schwingungsspektrum *a* ist. Die im ersten Schwingungsspektrum *a* stark ausgeprägte Schwingungsmode $M_4$ ist im zweiten Biegeschwingungsspektrum *b* stark gedämpft.

Da sich Peaks (Maxima) in den Schwingungsspektren *a, b* einfach automatisch bestimmen und charakterisieren lassen, können (benachbarte) korrespondierende Schwingungsmoden sowie deren Peakfrequenzen (Resonanzfrequenzen) auch zuverlässig automatisch bestimmt werden.

In den Schwingungsspektren *a, b* erscheinen die beiden korrespondierenden Schwingungsmoden $M_1$ und $M_2$ für eine Bestimmung von Filterparametern besonders gut geeignet zu sein. Dabei kann ein Algorithmus einer Steuer- und Auswerteeinheit typischerweise so konfiguriert ist, daß er bevorzugt die höherfrequenten, korrespondierenden Schwingungsmoden $M_2$ für die Bestimmung von Filterparametern auswählt, da sie eine höhere Genauigkeit der Analyse verspricht. Zur Auswahl des Schwingungsmodenpaares (Modenauswahl) können weitere Parameter wie der Abstand der Peakamplituden (Amplitude bei der jeweiligen Resonanzfrequenz) zu einem vordefinierten (detektorabhängigen) Rauschniveau und der Abstand der Resonanzfrequenzen herangezogen werden.

Alternativ dazu kann die Schwingungsmodenauswahl auch von einem Benutzer anhand einer Bildschirmvisualisierung vorgenommen werden.

Wie jedoch bereits weiter oben erläutert, ist die Klassifizierung der Moden häufig kompliziert, sodass die Modenauswahl typischerweise mittels numerischer Simulation von Schwingungsspektren für die Biegeprobe vor und nach dem dynamischen Belasten erfolgt.

Fig. 6 illustriert ein Verfahren 1000 zur dynamischen Belastungsprüfung einer Biegeprobe als Blockschema. In einem Block 1100 wird die Biegeprobe dynamisch belastet und dabei ein zeitabhängiges Signal, das mit einer Formänderung der Biegeprobe korreliert ist, gemessen und registriert.

In einem Block 1200 wird ein Schwingungsmodenpaar bestehend aus einer ersten Schwingungsmode der Biegeprobe vor der Formänderung (vor dem dynamischen Belasten) und einer der ersten Schwingungsmode entsprechenden zweiten Schwingungsmode der Biegeprobe nach der Formänderung (vor dem dynamischen Belasten) bestimmt.

Wie in Fig. 6 gezeigt ist, wird der Block 1200 typischerweise nach dem Block 1100 ausgeführt. Der Block 1200 kann aber auch zumindest teilweise parallel oder sogar vor dem Block 1100 ausgeführt werden (siehe dazu auch Fig. 7). Insbesondere kann ein (erwartetes) Schwingungsspektrum der Biegeprobe vor der Formänderung bestimmt werden, bevor das zeitabhängige Signal bei der dynamischen Belastung gemessen und registriert wird.

Danach kann in einem Block 1300 das Schwingungsmodenpaar zum Bestimmen eines Filterparameters oder mehrerer Filterparameter verwendet werden, die für ein in einem Block 1400 erfolgendes digitales Filtern des gemessenen und registrierten zeitabhängigen Signals zum Bestimmen eines Zeitpunktes, bei dem eine Querschnittsänderung der Biegeprobe während des dynamischen Belastens einsetzt, verwendet werden.

Fig. 7 illustriert ein Verfahren 1001 zur dynamischen Belastungsprüfung einer Biegeprobe als Blockschema. Das Verfahren 1000 ist ähnlich zudem oben mit Bezug zur Fig. 6 erläuterten Verfahren 1000 und weist ebenfalls die Blöcke 1100, 1200, 1230 und 1400 auf. Jedoch weist der Block 1200 des Verfahrens 1001 die Teilblöcke 1210, 1220 und 1240 auf.

Im Block 1210 werden Parameter für eine numerische Simulation des Schwingungsverhaltens der Biegeprobe vor und nach dem dynamischen Belasten bestimmt.

Anschließend werden im Block 1220 die numerischen Simulationen des Schwingungsverhaltens der Biegeprobe ausgeführt. Typischerweise werden dabei über numerische Modalanalyse erwartete diskrete Schwingungsspektren bestimmt. Bei den numerischen Simulationen des Schwingungsverhaltens der Biegeprobe können insbesondere FEM-Verfahren eingesetzt werden.

Anhand der numerischen Simulationen des Schwingungsverhaltens der Biegeprobe vor und nach dem dynamischen Belasten wird im Block 1240 ein Schwingungsmodenpaar bestimmt, das im Block 1300 zum Bestimmen eines Filterparameters oder mehrerer Filterparameter verwendet werden kann.

Schließlich erfolgt im Block 1400 das digitale Filtern des im Block 1100 gemessenen und registrierten zeitabhängigen Signals zum Bestimmen des Änderungszeitpunkts.

Wie durch den gestrichelten Pfeil in Fig. 7 dargestellt ist, kann das im Block 1100 gemessene und registrierte zeitabhängige Signal zur Validierung der nummerischen Simulation herangezogen werden. Wenn bspw. ein zunächst bestimmtes Schwingungsmodenpaar im zeitabhängigen Signal nicht oder nur sehr schwach detektiert werden kann, kann im Block 1240 ein anderes Schwingungsmodenpaar ausgewählt werden. Ein derartiges Ereignis kann aber auch eine Validierung der nummerischen Simulation auslösen.

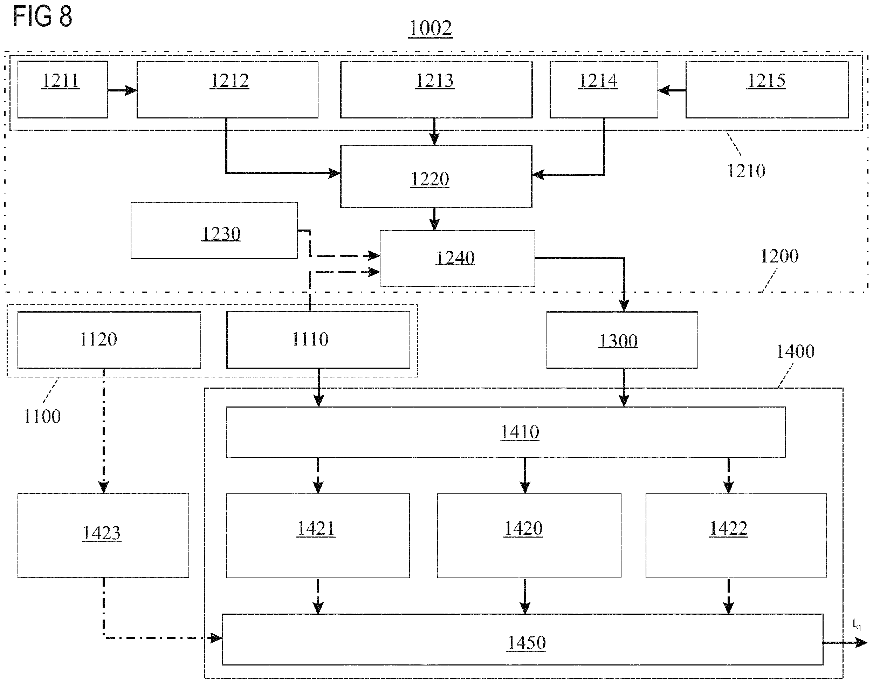

Fig. 8 illustriert ein Verfahren 1002 zur dynamischen Belastungsprüfung einer Biegeprobe als Blockschema. Das Verfahren 1001 ist ähnlich zudem oben mit Bezug zur Fig. 7 erläuterten Verfahren 1001 und weist alle Blöcke des Verfahrens 1001 auf. Das Verfahren 1002 ist jedoch wesentlich detaillierter und zeigt eine Reihe optionaler Blöcke und Verfahrenswege.

Wie in Fig. 8 gezeigt ist, weist der das Bestimmen der Parameter für die numerische Simulation illustrierende Block 1210 typischerweise einen, mehrere oder sogar alle der folgenden Teilblöcke auf:

1211, in dem eine Bruchflächenanalyse (BFA) erfolgt,
1212, in dem die Geometrie der Biegeprobe vor und nach dem dynamischen Belasten für die Simulation bestimmt wird und die Geometrien in jeweils ein CAD-Modell überführt werden, wofür Ergebnisse der Bruchflächenanalyse verwendet werden können,
1213, in dem die Lagerbedingungen der Biegeprobe während des dynamischen Belastens bestimmt bzw. für die Simulation aufbereitet werden (Festlegen von Randbedingungen),
1214, in dem die für die Simulation erforderlichen physikalischen Materialeigenschaften der Biegeprobe, insbesondere das Elastizitätsmodul und die Dichte der Biegeprobe (ggf. als ortsabhängige Funktionen innerhalb der Biegeprobe), bestimmt bzw. festgelegt werden, und

1215, in dem ein eine Temperatur bestimmt, typischerweise gemessen wird, bei der das dynamische Belasten der Biegeprobe erfolgt bzw. die Hammertests vor und nach der dynamischen Belastungsprüfung durchgeführt werden, die typischerweise in die Bestimmung der physikalischen Materialeigenschaften der Biegeprobe eingehen.

Die im Block 1210 bestimmten Parameter können im Block 1220 für die FEM-Simulation (Modalanalyse) der Biegeprobe vor und nach dem dynamischen Belasten verwendet werden.

Die Ergebnisse der FEM-Simulation (Modalanalyse) der Biegeprobe vor und nach dem dynamischen Belasten werden im Block 1240 zum Bestimmen eines Schwingungsmodenpaares verwendet, das charakteristisch für die Querschnittsänderung der Biegeprobe während des dynamischen Belastens ist.

Dabei kann auch eine Validierung der FEM-Simulation (Modalanalyse) vorgesehen sein. Dazu können vor und nach dem dynamischen Belasten aufgenommene Schwingungsspektren der Biegeprobe (Block 1230), die typischerweise mit einem jeweiligen Hammertest bestimmt werden, und/oder das im Block 1110 bestimmte zeitabhängige Signal verwendet werden.

Im Block 1300 wird das Schwingungsmodenpaar zum Bestimmen mindestens eines Filterparameters verwendet, der in einem Block 1410 zum Bilden eines oder mehrerer Signalfiltrate des zeitabhängigen Signals verwendet werden kann.

Das zeitabhängige Signal kann mit einem (NF-) DMS als Einzel-DMS und/oder einer DMS-Vollbrücke bzw. einer DMS-Halbbrücke bestimmt werden, wie es oben mit Bezug zu den Figuren 1 und 2 erläutert wurde.

Anschließend kann einer, zwei oder sogar alle drei der folgenden digitalen Signalverarbeitungsprozeduren des Blocks 1400 verwendet werden:

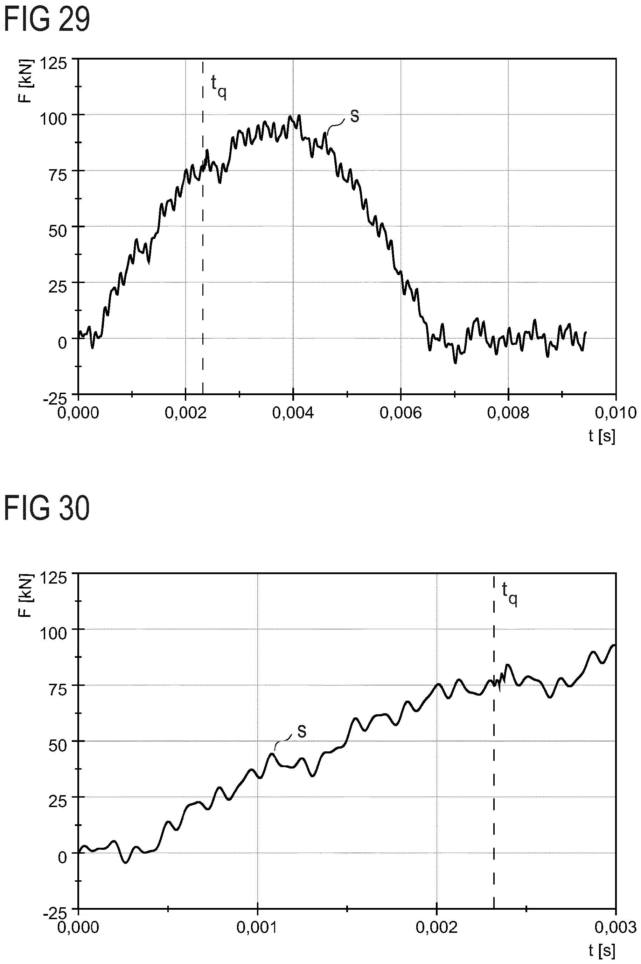

1421, in dem eine Schwebung analysiert wird, wie unten detailliert mit Bezug zu den Figuren 29 bis 37 erläutert wird,

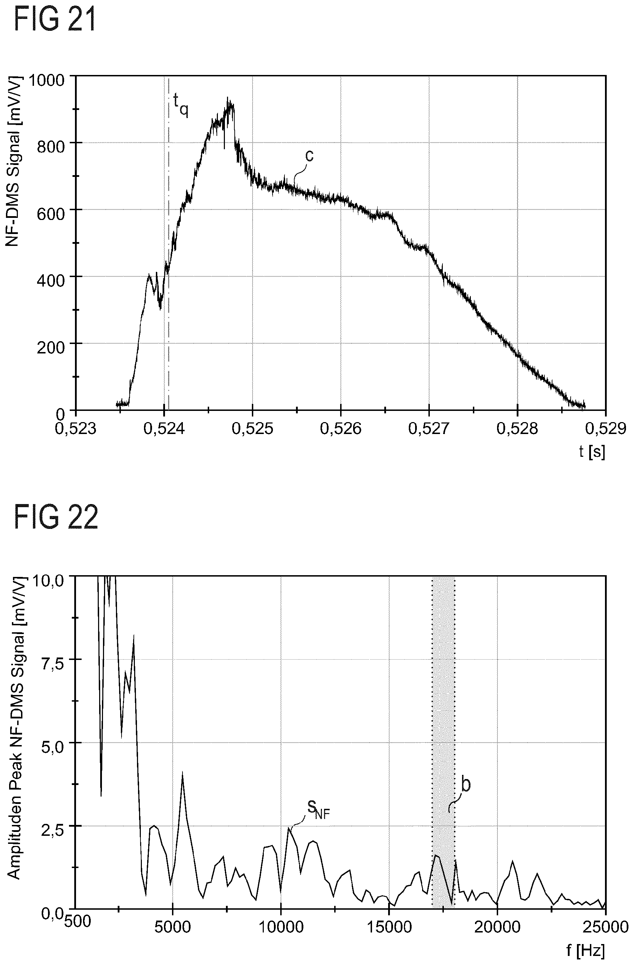

1420, in dem zumindest eine Amplitude des Schwingungsmodenpaares analysiert wird, wie unten detailliert mit Bezug zu den Figuren 21 bis 28 erläutert wird, und

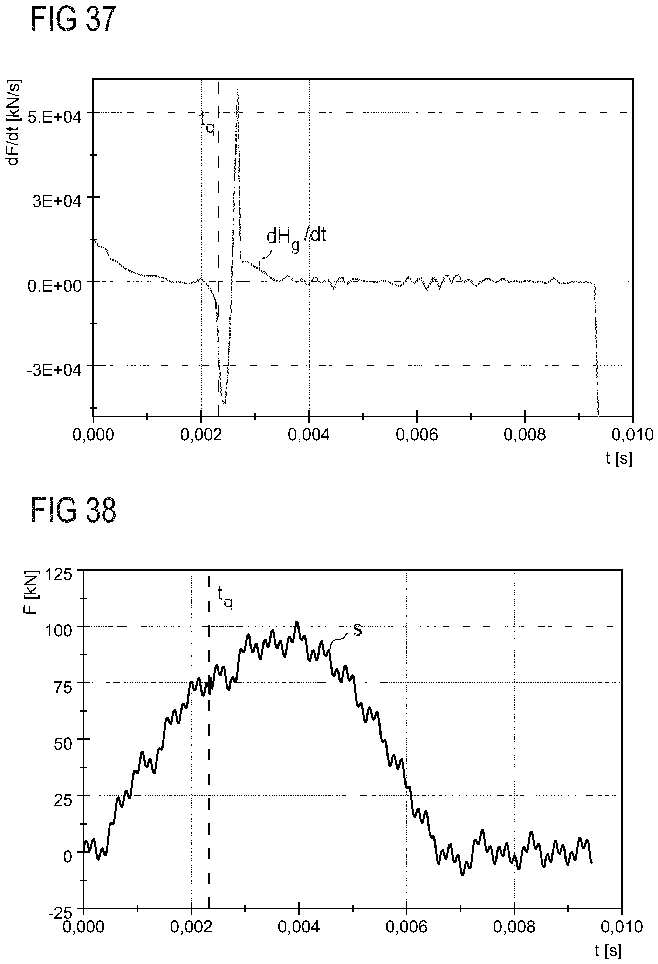

1422, in dem ein Phasensprung analysiert wird, wie unten detailliert mit Bezug zu den Figuren 38 bis 46 erläutert wird.

Schließlich wird im Block 1450 der Zeitpunkt $t_q$, bei dem eine Querschnittsänderung der Biegeprobe während des dynamischen Belastens einsetzt, bestimmt bzw. ausgegeben.

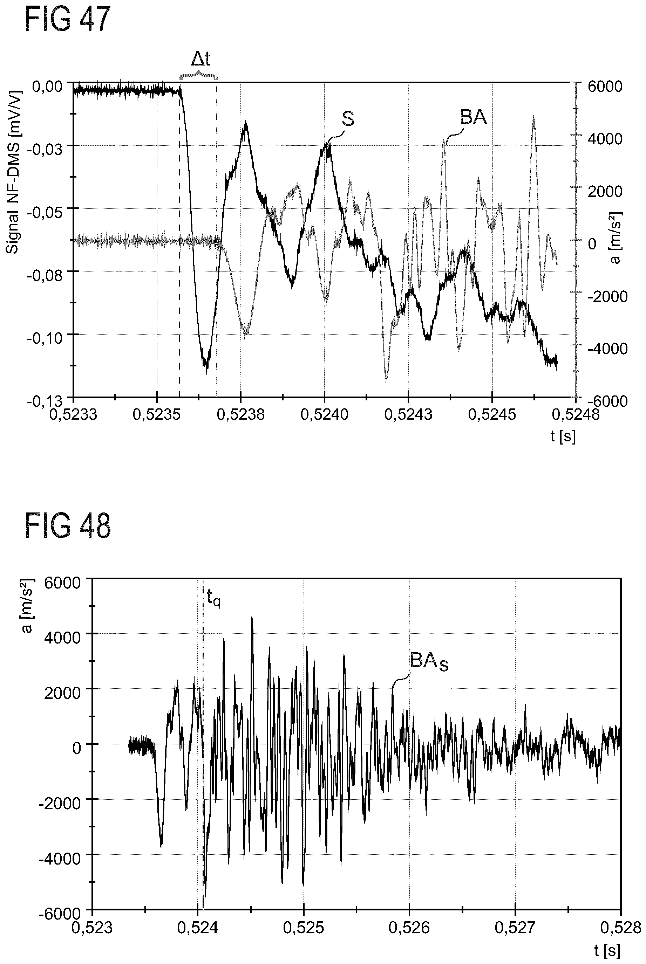

Alternativ oder typischer ergänzend kann ein im Block 1120 mit einem entsprechendem Beschleunigungssensor aufgenommenes Beschleunigungssignal in einem Block 1423 digital gefiltert werden und zur Bestimmung des Zeitpunktes $t_q$ herangezogen bzw. verwendet werden. Dies wird unten detailliert mit Bezug zu den Figuren 47 bis 52 erläutert.

Typischerweise wird zumindest der Block 4120 zur Bestimmung des Zeitpunktes $t_q$ ausgeführt.

Es kann aber auch vorgesehen sein, den Zeitpunkt $t_q$ durch eine arithmetische Mittelung bzw. gewichtete Mittelung mehrerer oder sogar aller von den jeweiligen Blöcken 4120 - 1423 bestimmten Zeitpunkt $t_q$ zu ermitteln, z.B. als gewichtetes Mittel mit dem Inversen der jeweiligen Streuung als Gewicht.

Welcher der Blöcke 4120 - 1423 zur Berechnung des Zeitpunkt $t_q$ herangezogen wird bzw. mit welchem Gewicht kann aber auch von Ergebnissen der BFA in Block 1211 abhängen, z.B. davon ob eine ermittelte relative Querschnittsänderung $\eta$ mindestens einem typischerweise material- und probengeometrieabhängigen Schwellenwert entspricht (von bspw. 4,5 $10^{-2}$ für Gusseisen und SE(B)-Probe).

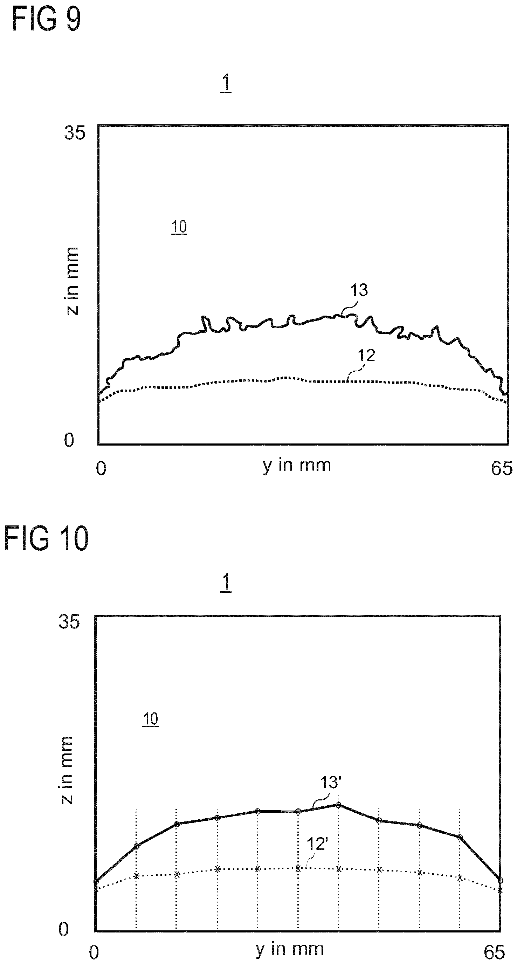

Durch eine spezielle Wärmebehandlung der Biegeproben (engl.: "*heat tinting*") nach der dynamischen Belastungsprüfung lassen sich die Rissfronten des eingeschwungenen Ermüdungsanrisses 12 (Figur 9) und die des durch die dynamische Belastungsprüfung entstandenen Risses 13 (Figur 9) farblich unterscheiden und vermessen.

Die Ergebnisse der BFA liegen typischerweise in tabellarischer Form vor, die die Grundlage für die Erstellung einer CAD-Probengeometrie für die numerische FEM-Simulation (Modalanalyse) bilden kann.

Fig. 9 zeigt einen exemplarischen Ausschnitt eines Querschnitts einer Biegeprobe 1, wie sie mit Bezug zur Fig. 1 erläutert wurde, oberhalb des mechanischen Kerbes nach dem dynamischen Belasten in der Vorrichtung gemäß Fig. 1.

Fig. 10 zeigt den in Fig. 9 dargestellten Ausschnitt mit einer exemplarischen Diskretisierung 12', 13' der Rissfronten 12, 13 für die CAD-Probengeometrie für eine numerische FEM-Simulation. Beispielsweise können die Rissfronten 11, 12 entsprechend der 9-Punkte Methode angenähert bzw. approximiert werden.

Fig. 11 zeigt eine perspektivische Ansicht eines zur Simulation verwendeten Models der Biegeprobe 1 vor dem dynamischen Belasten, d.h. mit dem approximierten eingeschwungenen Ermüdungsanrisses 12' gemäß BFA sowie ein kartesisches Koordinatensystem (xyz).

Fig. 12 zeigt eine perspektivische Ansicht eines zur Simulation verwendeten Models der Biegeprobe 1 nach dem dynamischen Belasten, d.h. mit dem durch die dynamische Belastung entstandenen approximierten Riss 13' gemäß BFA sowie das kartesische Koordinatensystem.

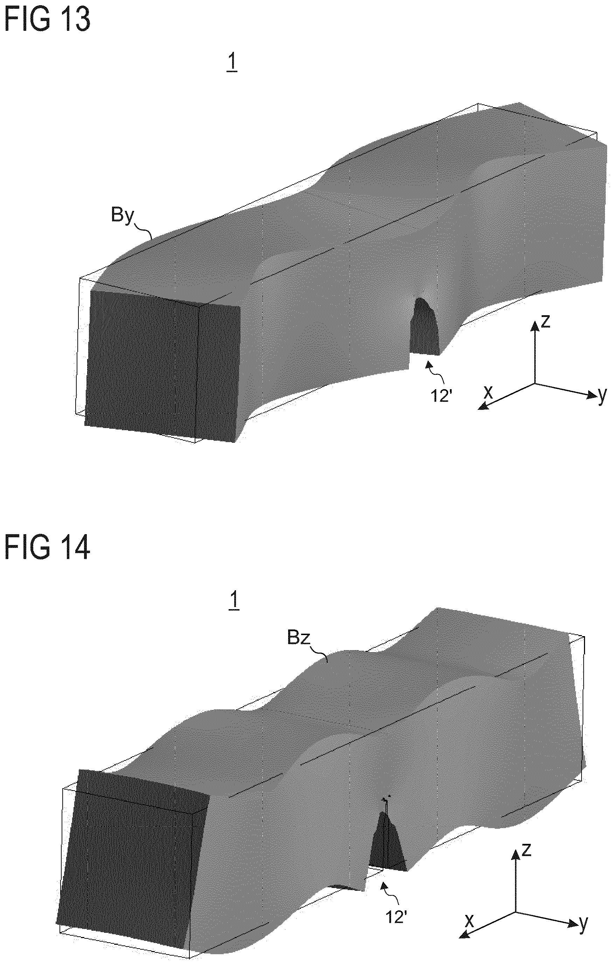

In den Fig. 13 bis 16 werden perspektivische Ansichten von Schwingungsmoden der in Fig. 11 bzw.

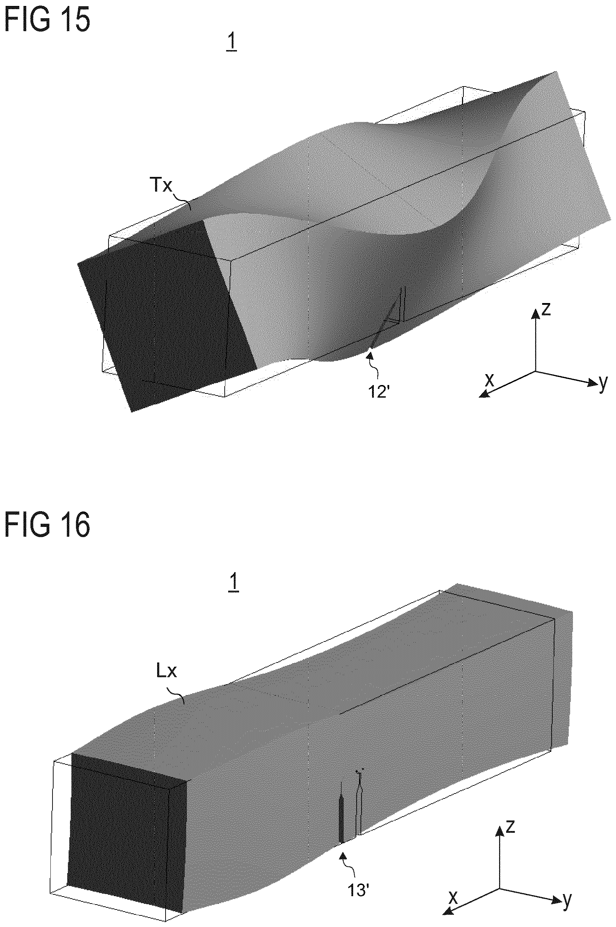

12 dargestellten Biegeprobe 1 dargestellt, die mit einer FEM-Modalanalyse ("AN-SYS 15") berechnet wurden. Dabei werden in Fig. 13 und 14 Transversaleigenbiegeschwingungen (Transversalbiegemoden) By und Bz in x-Ausbreitungsrichtung, in Fig. 15 eine Torsionseigenschwingung Tx um die x-Achse und in Fig. 16 eine Longitudinaleigenschwingung Lx entlang der x-Achse dargestellt und zwar jeweils ein ausgelenkter Zustand im Vergleich zum Ruhezustand.

Im Folgenden werden Schwingungen bzw. Moden mit einem "B", "T", oder "L" gefolgt von der jeweiligen Achse oder einem "S" gekennzeichnet. Dabei steht "B" für transversale Biegeschwingungen bzw. Moden, "L" für longitudinale Schwingungen bzw. Moden, "T" für Torsionsschwingungen bzw. -moden und "S" für Starrkörperverschiebungen. Eine Überlagerung von zwei oder mehr Schwingungszuständen wird durch über einen Schrägstrich "/" verbundene Modensymbole gekennzeichnet. So repräsentiert etwa die Angabe einer Modenart "Bz/Lx" eine Überlagerung einer Transversalschwingung in z-Richtung mit einer Longitudinalschwingung in x-Richtung.

Die Simulationen werden für die Biegeprobe 1 jeweils vor und nach dem dynamischen Belasten entsprechend der Lagerung der Biegeprobe 1 ausgeführt. Die Figuren 13 bis 16 wurden für eine 3L-Lagerung erzeugt.

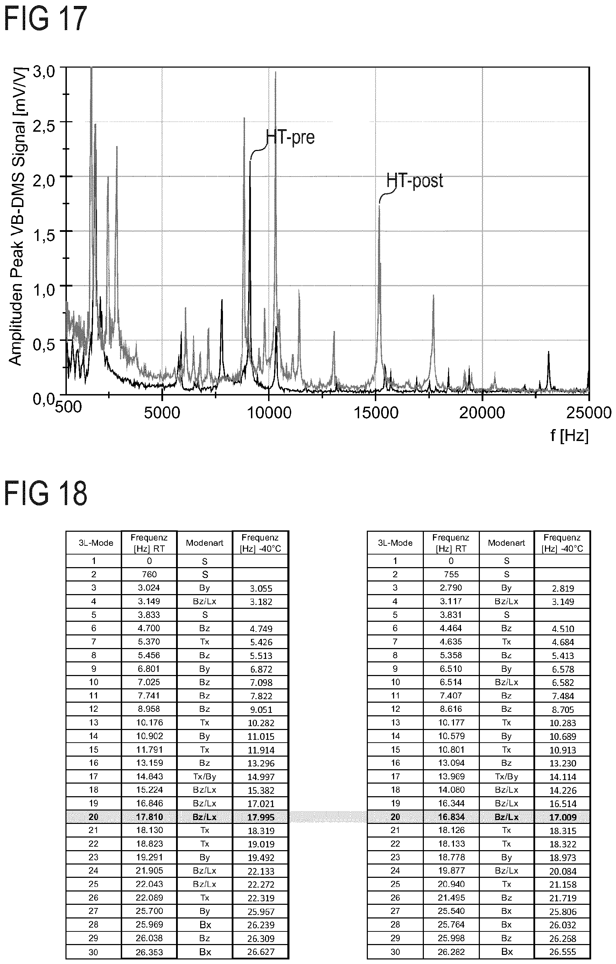

Fig. 17 zeigt ein über einen jeweiligen Hammertest (HT) bestimmtes erstes Schwingungsspektrum HT-pre der SE(B)-Probe 1 vor (pre) dem dynamischen Belasten und ein zweites Biegeschwingungsspektrum HT-post der Biegeprobe 1 nach (post) dem dynamischen Belasten. Deutlich werden hier die teilweise Verschiebung von Resonanzfrequenzen (Moden) nach Verringerung des Probenquerschnittes wegen Risswachstums infolge der dynamischen Belastungsprüfung. Eine Aussage inwieweit Moden des HT-pre-Spektrums mit Moden des HT-post-Spektrums korrespondieren ist ohne eine geeignet parametrierte (FEM-) Simulation (Modalanalyse) jedoch kaum zu treffen.

Mittels der Simulation (nummerischer Modalanalyse) kann eine Liste von Resonanzfrequenzen und über die Animation der Gesamtverformung der Einzelresonanzen (Moden) die Schwingungsart der Moden bestimmt werden.

In den Figuren 18 bis 20 werden die Ergebnisse der mittels FEM-Simulation gewonnen Ergebnisse zur Modalanalyse tabellarisch für die typischen Lagerungen 3L, 2L und ff dargestellt. Typischerweise sollten dabei jeweils zumindest 30 Moden berechnet werden.

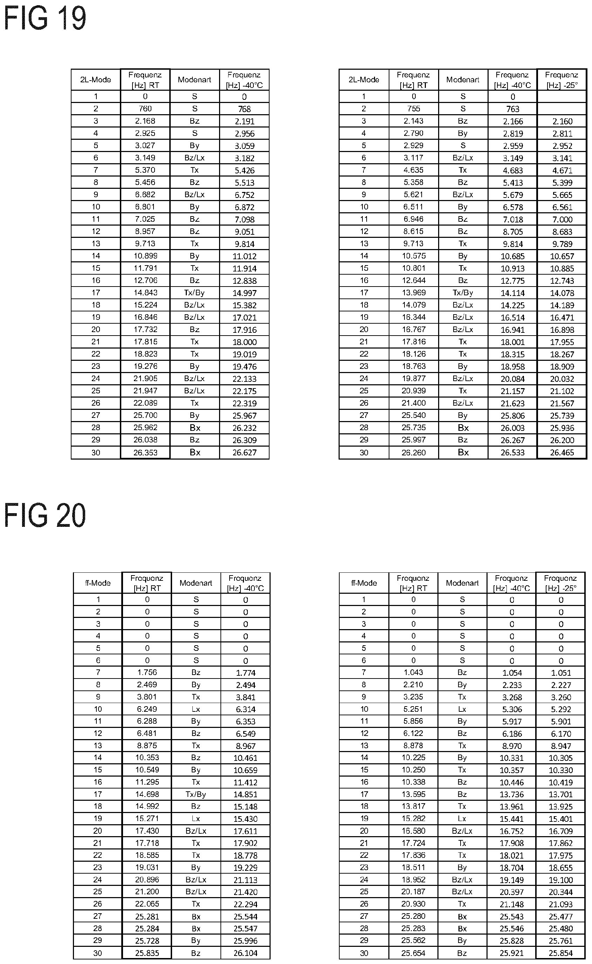

Typischerweise werden die Ergebnisse der Modalanalyse zunächst validiert. Dazu wurde vorliegend die Ergebnistabelle der FEM-Simulation (Modalanalyse) für die 2L-Lagerung (Fig. 19) mit den Amplitudenpeaks der HT-pre- und HT-post-Spektren (Fig. 17) sowie die die Ergebnistabelle der FEM-Simulation (Modalanalyse) für die ff-Lagerung (Fig. 20) mit korrespondierenden, nichtdargestellten experimentell bestimmten Amplitudenpeaks verglichen.

Für eine positive Validierung sollten sich mehrere Amplitudenpeaks der HT-pre und HT-post Frequenzspektren in den entsprechenden Ergebnissen der FEM-Simulation (Modalanalyse) für die ff- und 2L-Lagerung mit einer Peakfrequenzübereinstimmung von typischerweise kleiner 1 % wiederfinden lassen.

Gelingt die Validierung nicht, kann die Geometrie der Probe 1 besser approximiert werden (geringere Meshweite) und/oder die Parametrierung der Simulation angepasst werden bevor erneut simuliert wird.

Gelingt wie vorliegend die Validierung der Simulationsergebnisse für die zu untersuchende Probe 1, so erfolgt typischerweise eine Systematisierung der durch Simulation errechneten Moden. Dazu kann in den Frequenzspektren der DMS-Vollbrücke (VB-Signal zur Kraftmessung, siehe DMS-Vollbrücke 4 in den Figuren 1 und 2) und im Messsignal des Nahfeld-DMS (siehe NF-DMS 5 in den Figuren 1 und 2) bzw. in den Frequenzspektren einer DMS-Halbbrücke nach dem Vorhandensein von für die 3L-Lagerung charakteristischen Frequenzanteilen (nach Systematik korrespondierende Moden) gesucht werden, die gemäß Simulation ein Schwingungsmodenpaar bilden, dessen Resonanzfrequenzen eine hohe Frequenzspreizung zwischen ungeprüftem, eingeschwungenem Zustand und geprüftem Zustand erwarten lässt.

Im exemplarischen Ausführungsbeispiel wird das in Fig. 18 markierte Schwingungsmodenpaar mit der 3L-Moden-Nummer 20 ausgewählt, dass eine Frequenzspreizung von ca. 980 Hz aufweist. Basierend auf den Frequenzen dieser Moden kann dann die sich anschließende Filterparametrierung erfolgen.

Fig. 21 das zeitabhängiges Signal c, das während des dynamischen Belastens der SE(B)-Probe mit der in Fig. 11 und 12 dargestellten Probengeometrie mittels des in Figur 1 gezeigten NF-DMS 5 ermittelt wurde, wobei zur besseren Orientierung zusätzlich der später bestimmte Zeitpunktes $t_q$, bei dem eine Querschnittsänderung der Biegeprobe 1 während des dynamischen Belastens einsetzt, eingezeichnet wurde, wobei $t_q$ mittels eines optischen Referenzverfahrens bestimmt worden ist.

Wie dem in Fig. 22 dargestellten und mittels FFT gewonnenem zugehörigen Spektrum $S_{NF}$ des in Fig. 21 gezeigten ein zeitabhängiges Signals c entnommen werden kann, kann der Frequenzbereich b des ausgewählten Schwingungsmodenpaares mit der 3L-Moden-Nummer 20 von 17009 Hz bis 17955 Hz im Signalspektrum des NF-DMS gut nachgewiesen werden.

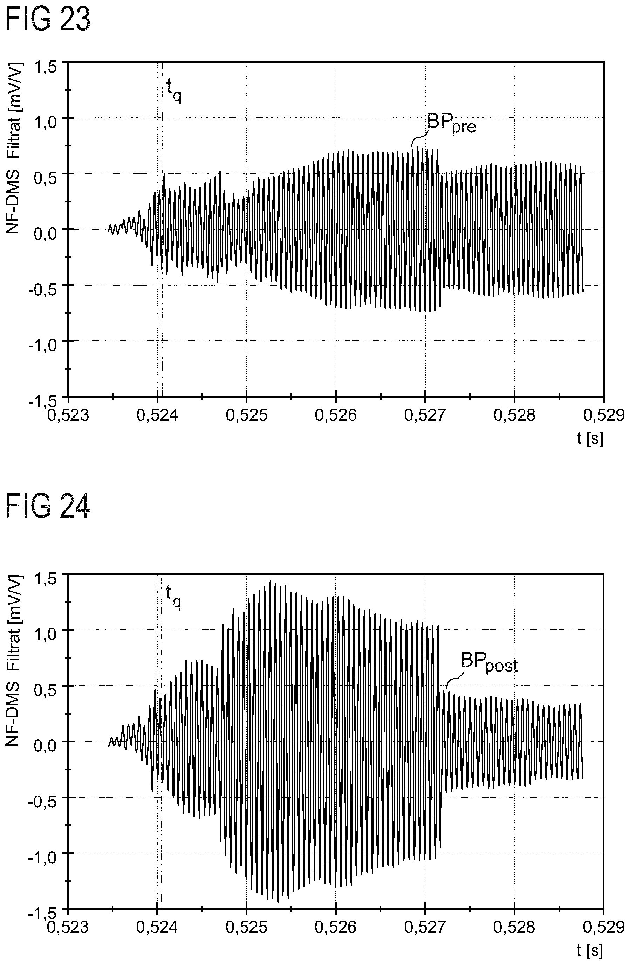

Zur digitalen Filterung kann zunächst ein IIR-Filter auf das NF-DMS-Signal c angewendet. Die Ober- und Untergrenze des Frequenzbandes des digitalen Filters wurde dabei mit +/- 25 Hz um die mittels FEM-Simulation (Modalanalyse) ermittelte des ausgewählten Schwingungsmodenpaares bei einer Probentemperatur von - 40°C gesetzt, d.h. es wurde ein Frequenzband von 17009 Hz +/- 25 Hz bzw. 17955 Hz +/- 25 Hz gewählt, um die in den Figuren 23 und 24 gezeigten jeweiligen (Bandpass-) Filtrate zu erzeugen. Dabei zeigt Figur 23 das Filtrat $BP_{pre}$, das für die Filtergrenzen um die erste Schwingungsmode des ausgewählten Schwingungsmodenpaares vor der Querschnittsänderung (der dynamischen Belastung, ungeschädigte Probe) erhalten wurde und Figur 24 das Filtrat $BP_{post}$, das für die Filtergrenzen um die zweite Schwingungsmode des ausgewählten Schwingungsmodenpaares nach der Querschnittsänderung (der dynamischen Belastung, geschädigte Probe) erhalten wurde.

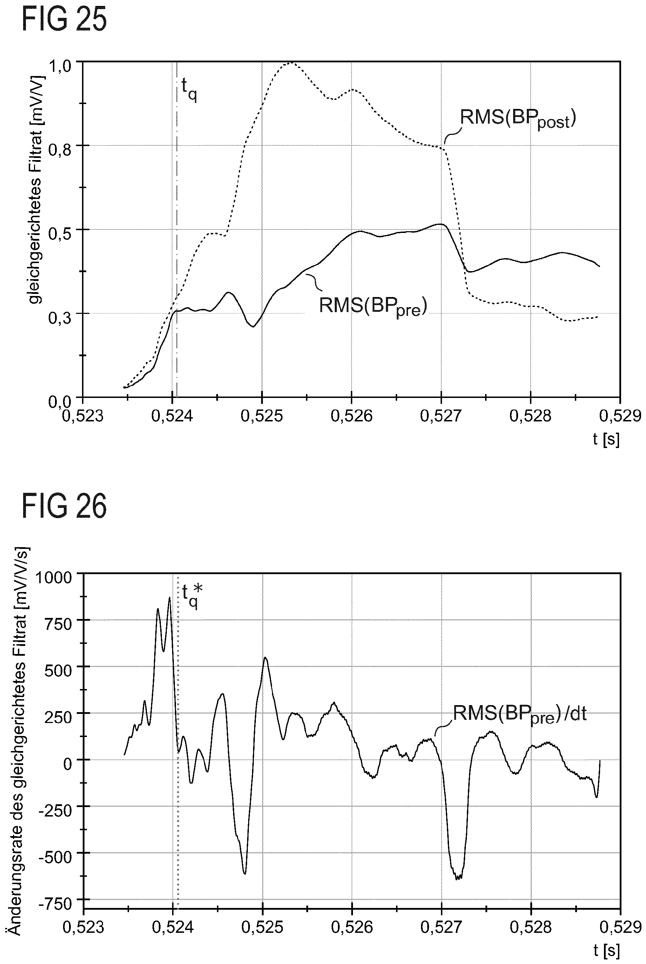

Anschließend können Effektivwerte als quadratische Mittel $RMS(BP_{pre})$ und $RMS(BP_{post})$ der Filtrate $BP_{pre}$ und $BP_{post}$ gebildet werden, die in Figur 25 dargestellt sind (RMS von engl. root mean square).

In Fig. 25 ist gut zu erkennen, dass sich die Amplituden der beiden Signalanteile nach Eintreten der Querschnittsänderung in der Nähe des zusätzlich eingezeichneten Zeitpunktes $t_q$ different entwickeln. Trotz Anstieg des Gesamtsignales stagniert der RMS(BPpre)-Signalanteil, der repräsentativ für die ungeschädigte/ungeprüfte Probengeometrie ist, wobei der RMS(BPpost)-Signalanteil zeitlich weit über das Maximum des Gesamtsignales hin anwächst. Eine genauere Analyse zeigt, dass das Stagnieren des RMS(BPpre)-Signalanteils einer Modenspaltung zugeordnet werden kann. Der Verlauf des Signalanteils RMS(BPpre) ist daher ein guter Indikator für die Bestimmung des Zeitpunktes $t_q$ des Einsetzens der Querschnittsänderung der Probe.

Leitet man RMS(BPpre) nach der Zeit t ab ergibt sich der in Fig. 26 gezeigte Verlauf. Der Zeitpunktes $t_q{}^*$ des Einsetzens der Querschnittsänderung der Probe bestimmt durch das Verfahren zur dynamischen Belastungsprüfung kann somit aus dem ersten signifikantem lokalen Minimum des Signalanteils RMS(BPpre) nach dem Zeitpunkt der Modenspaltung bestimmt werden.

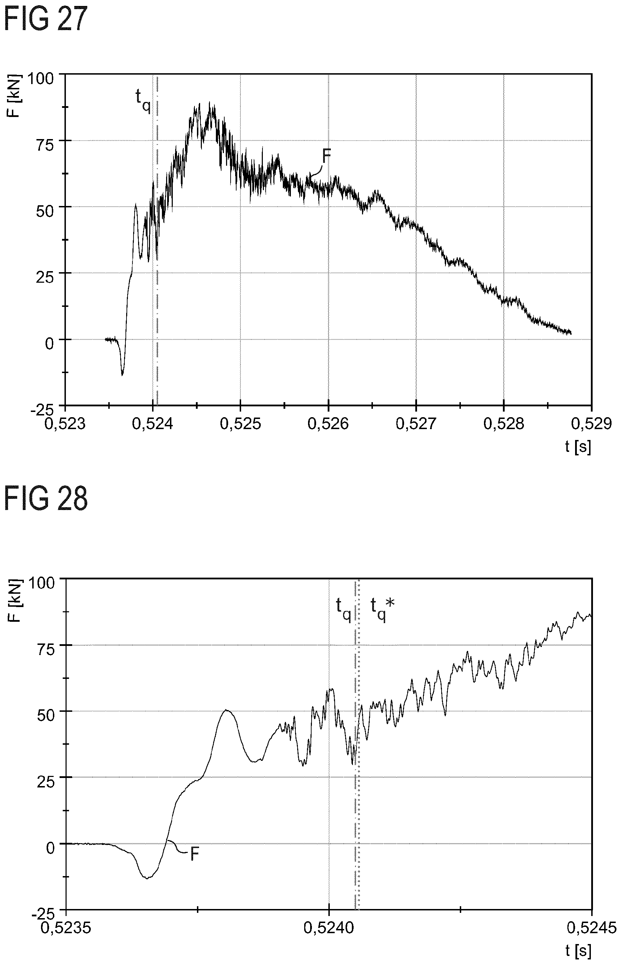

Fig. 27 zeigt ein mit den Vollbrücken-DMS 4 gemäß Figur 1 während des dynamischen Belastens parallel aufgenommenes Kraftsignal F(t). Fig. 28 zeigt einen zeitlich höher aufgelösten (vergrößerten) Ausschnitt des Kraftsignals aus Figur 27 in der Nähe des Zeitpunkts $t_q$, wobei $t_q$ mittels eines optischen Referenzverfahrens bestimmt worden ist.

Die beiden Werte $t_q$ und $t_q$ liegen mit einer zeitlichen Differenz von 7,5 ns sehr dicht beieinander, welches einem Anteil an der Primärbelastungszeitspanne von ca. 0,006 %c entspricht.

Kleine Ligamentenquerschnittsänderungen ($\eta \leq 4,5\ 10^{-2}$), z.B. bei sogenannten low-blow-Prüfungen im Bereich von bis zu etwa 1 mm Risswachstum, führen typischerweise nur zu geringen Änderungen der Resonanzfrequenzen der stabförmigen Proben. Typischerweise entstehen dabei jedoch charakteristische Schwebungen.

Daher kann entsprechend der BFA (Block 1211 in Fig. 8) entschieden werden, alternativ oder zusätzlich zu der Amplitudenanalyse des Schwingungsmodenpaares (Block 1240 in Fig. 8), wie es oben mit Bezug zu den Figuren 29 bis 37 detailliert beschrieben wurde, eine Schwebungsanalyse vorzunehmen (Block 1421 in Fig. 8).

Eine Ursache für das Auftreten von Schwebungen liegt im zyklischen Wiederverschließen der sich bildenden Risse während der Belastungsprüfung bei geringen plastischen Durchbiegungen der Probe. Dadurch können zyklisch auf dem Frequenzband eng nebeneinanderliegende Eigenfrequenzen mit nicht konstanten Amplituden auftreten.

Ein daraus resultierendes simuliertes Signalverhalten im Kraftsignal F als Funktion der Zeit wird in den Figuren 29 und 30 dargestellt, wobei Fig. 30 einen zeitlich höher aufgelösten Ausschnitt zeigt.

Die Figur 30 lässt eine höherfrequente Anomalie um bzw. nach dem Zeitpunkt $t_q$ erkennen.

Originalkraftsignale (gemessene Kraftsignale) sind in der Regel noch multifrequenter und können vor allem höherfrequent moduliert/zusammengesetzt (elektronisches Verstärkerrauschen, white noise) sein. Aus Gründen der Übersichtlichkeit wird auf ihre Darstellung aber verzichtet.

Auch für die Schwebungsanalyse werden die Signale typischerweise frequenzselektiv im Frequenzbereich eines relevanten Schwingungsmodenpaares gefiltert.

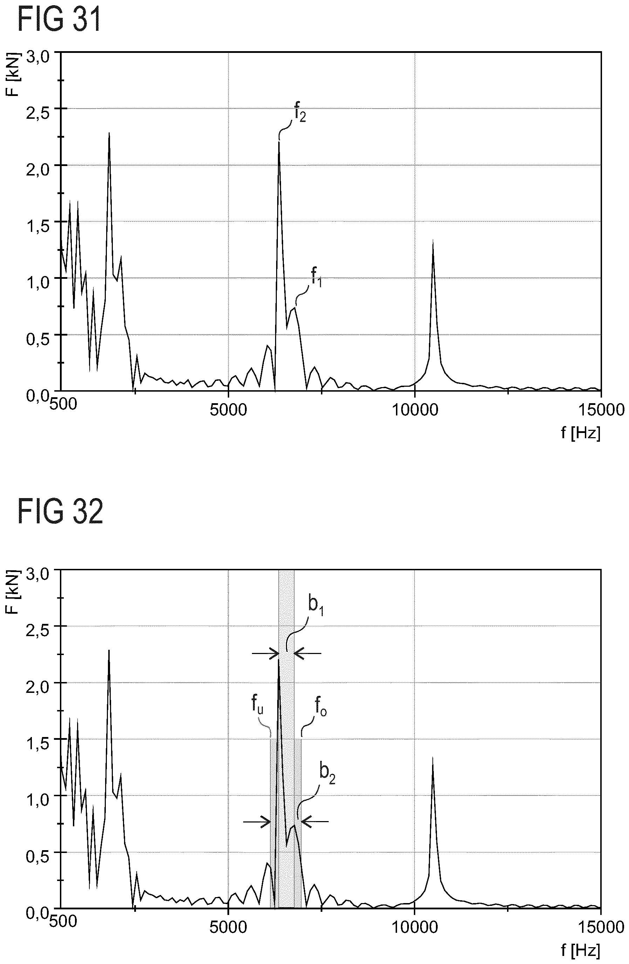

Figur 31 zeigt ein charakteristisches Frequenz-Spektrum für einen dynamischen low-blow-Dreipunktbiegeversuch, welches aus dem in Figuren 29, 30 dargestellten Kraftsignal s mittels einer FFT gewonnen wurde.

Zwischen den Frequenzen $f_2$ und $f_1$ ist eine Schwebung zu erkennen. Dabei ist $f_1$ eine Resonanzfrequenz der ungeprüften Probe (d.h. der ersten Schwingungsmode des Schwingungsmodenpaares) und $f_2$ eine Resonanzfrequenz der geprüften Probe (d.h. der zweiten Schwingungsmode des Schwingungsmodenpaares).

Die Beträge für $f_1$ und $f_2$ können dabei aus dem Frequenzspektrum des Messsignals der DMS-Vollbrücke selbst, oder aus FEM-Simulation mittels Modalanalyse bzw. durch Auswertung der Hammertests vor und nach der dynamischen Belastungsprüfung bestimmt werden.

Wie anhand der auf Fig. 31 basierenden Fig. 32 erläutert wird, können die Filtergrenzen $f_u$ (untere Grenzfrequenz) und $f_o$ (obere Grenzfrequenz) für die Bandpassfilterung wie folgt bestimmt werden. Die Bandpassbreite $b_2$ wird größer als die Differenz der Peakfrequenzen $f_1$, $f_2$ gewählt ($b_2>b_1=f_1-f_2$).

Typischerweise liegt die Bandpassbreite $b_2$ in einem Bereich von $1.1*b_1$ bis $4*b_1$, noch typischer in einem Bereich von $1,5*b_1$ bis $2,5*b_1$.

Für die folgenden Analysen wurde $b_2=2*b_1$ gewählt. Außerdem wird der Bandpassfilterbereich typischerweise symmetrisch um den Mittelwert der Peakfrequenzen $f_1$, $f_2$ gewählt. Damit ergeben sich die der Grenzfrequenzen des Filters fo und fu zu: $f_u=f_2-(b_1/2)$ und $f_o=f_1+(b_1/2)$.

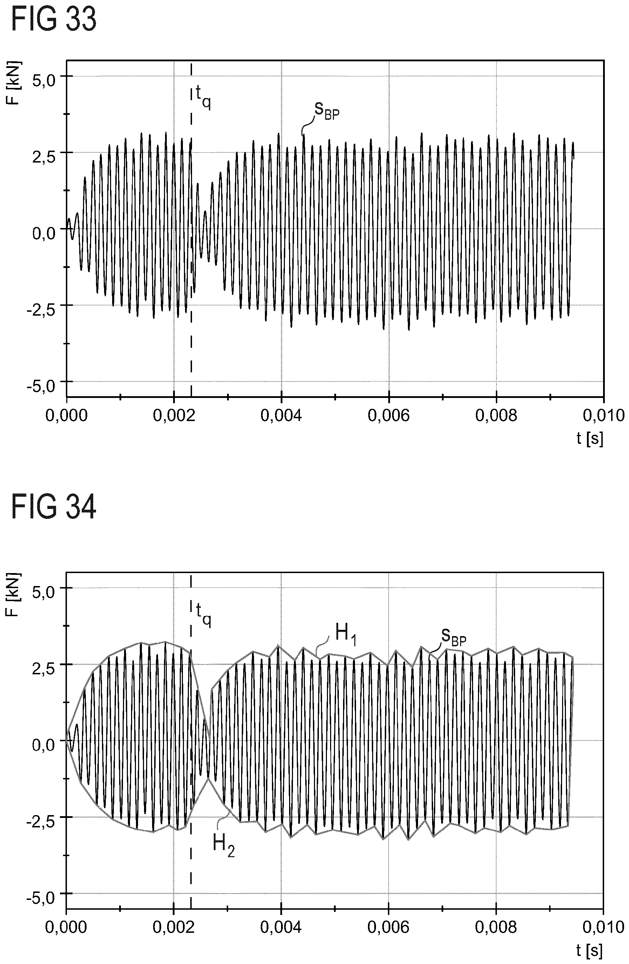

Das mit diesem Bandpassfilter erzeugte Bandpassfiltrat $S_{BP}$ des Kraftsignals s wird in Fig. 33 gezeigt. Darin ist der Amplitudenabfall zum (zusätzlich eingezeichneten und zu bestimmenden) Zeitpunkt tq des Auftretens der Schwebung respektive zum Zeitpunkt der Querschnittsänderung der Probe bereits gut zu erkennen.

Zur weiteren numerischen Auswertung wird typischerweise eine obere Hüllkurve $H_1$ und eine untere Hüllkurve $H_2$ des Bandpassfiltrates $S_{BP}$ gebildet, die in Fig. 34 dargestellt werden.

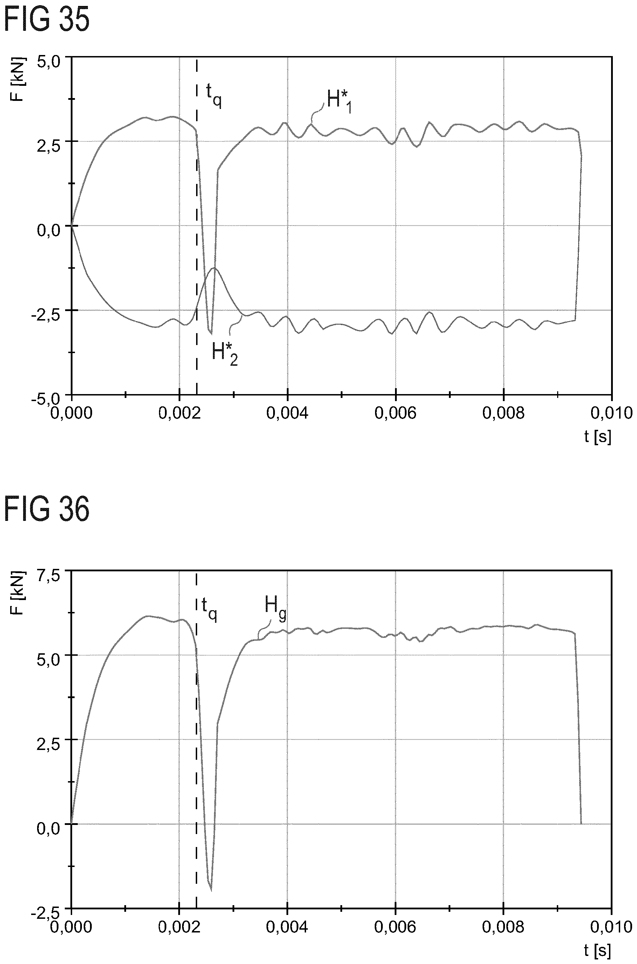

Anschließend können die Hüllkurve $H_1$, $H_2$ approximiert und/oder geglättet werden, typischerweise mit einem Spline, was zu den in Fig. 35 dargestellten geglätteten Hüllkurven $H^*_1$, $H^*_2$ führt.

Anschließend kann die geglättete untere Hüllkurve $H^*_2$ invertiert und zu der geglätteten oberen Hüllkurve $H^*_1$ hinzuaddiert werden, um die in Fig. 36 dargestellte gleichgerichtete Hüllkurve $H_g$ gemäß:

$$H_g = H^*_1 + H^*_2 (-1)$$

zu erzeugen.

Der Zeitpunkt $t_q$ kann dann als der Zeitpunkt berechnet werden, bei dem ein erstes signifikantes Absinken des Differentiales $dH_g/dt$ festzustellen ist.

Wie in Fig. 37 dargestellt ist, kann der Zeitpunkts $t_q$ typischerweise als Zeitpunkt bestimmt werden, bei dem das Differential $dH_g/dt$ als Peak in den negativen $dF/dt$ - Bereich abfällt, genauer zum Zeitpunkt an dem $dH_g/dt$ den Peakhalbwert des ersten negativen $dF/dt$ - Peaks erreicht.

Durch schlagartige Entspannung im Bereich der Rissspitze zu Beginn der Phase der Querschnittsänderung kann es außerdem zu sprunghaften Phasenverschiebungen ein oder mehrerer Resonanzfrequenzen (Moden) beim dynamischen Belasten kommen. Das Auftreten von sogenannten Phasensprüngen im Zeitbereich des Lastanstieges bis zum Erreichen des Kraftmaximums kann daher ebenfalls ein Indiz für das Einsetzen der Rissbildung in der Probe sein.

Daher kann alternativ oder zusätzlich zur Amplitudenanalyse des Schwingungsmodenpaares eine Phasenanalyse durchgeführt werden (Block 1422 in Fig. 8).

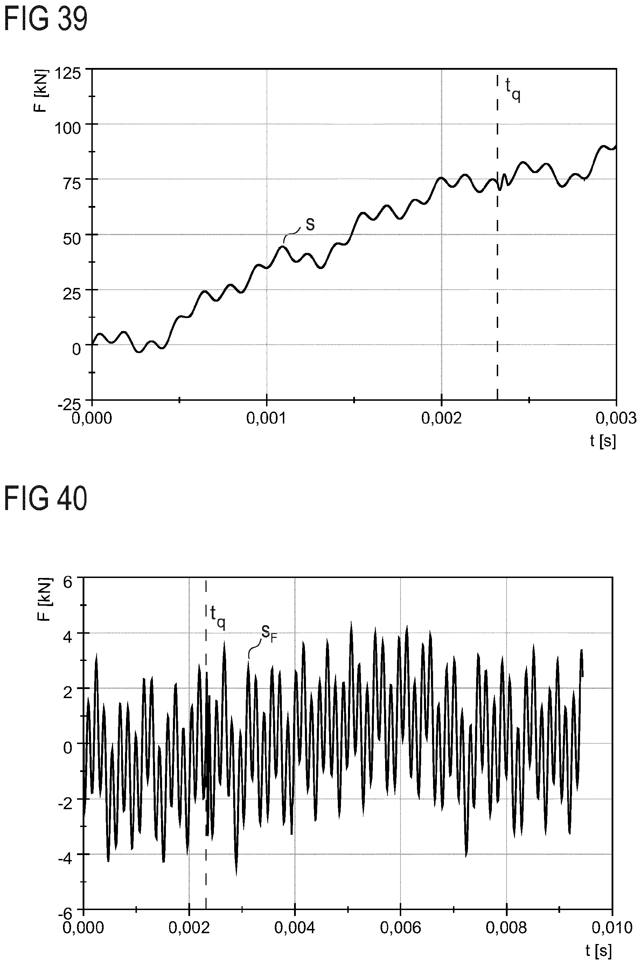

Fig. 38 zeigt ein entsprechendes Kraftsignal S einer SE(B)-Probe das mittels einer Simulation generiert wurde sowie den Zeitpunkt $t_q$ des Einsetzens der Querschnittsänderung der Probe als gestrichelte Linie. Fig. 39 zeigt das Kraftsignals S in höherer zeitlicher Auflösung, bei der eine Phasen-Anomalie in der Nähe des Zeitpunkts $t_q$ erkennbar ist.

Originalkraftsignale sind typischerweise noch multifrequenter und können vor allem höherfrequent moduliert/zusammengesetzt (elektronisches Verstärkerrauschen, white noise) sein. Aus Gründen der Übersichtlichkeit wird auf ihre Darstellung verzichtet.

Auch für die Phasenanalyse werden die (Kraft-) Signale typischerweise frequenzselektiv im Frequenzbereich eines relevanten Schwingungsmodenpaares gefiltert.

Typischerweise erfolgt dazu zunächst eine Bandpassfilterung, die über eine erste Tiefpassfilterung mit danach folgender Subtraktion des Tiefpassfiltrates vom Kraftsignal zur Erzeugung eines Signalfiltrats $S_F$ berechnet werden kann, wie es in Fig. 40 gezeigt wird.

In dem exemplarischen Ausführungsbeispiel gemäß Fig. 40 wurde ein digitaler IIR-Tiefpassfilter 2. Ordnung mit einer Grenzfrequenz von 5% über der zu untersuchenden Resonanzfrequenz der ungeprüften Probe (d.h. der ersten Schwingungsmode des Schwingungsmodenpaares) gefiltert wird. Danach erfolgte zur Berechnung des Signalfiltrats $S_F$ eine Subtraktion des so erhaltenen Tiefpassfiltrates vom Originalsignal S.

Typischerweise liegt die Grenzfrequenz des Tiefpassfilters in einem Bereich von 1% bis 10%, noch typischer in einem Bereich von 2% bis 7% über der zu untersuchenden Resonanzfrequenz der ungeprüften Probe.

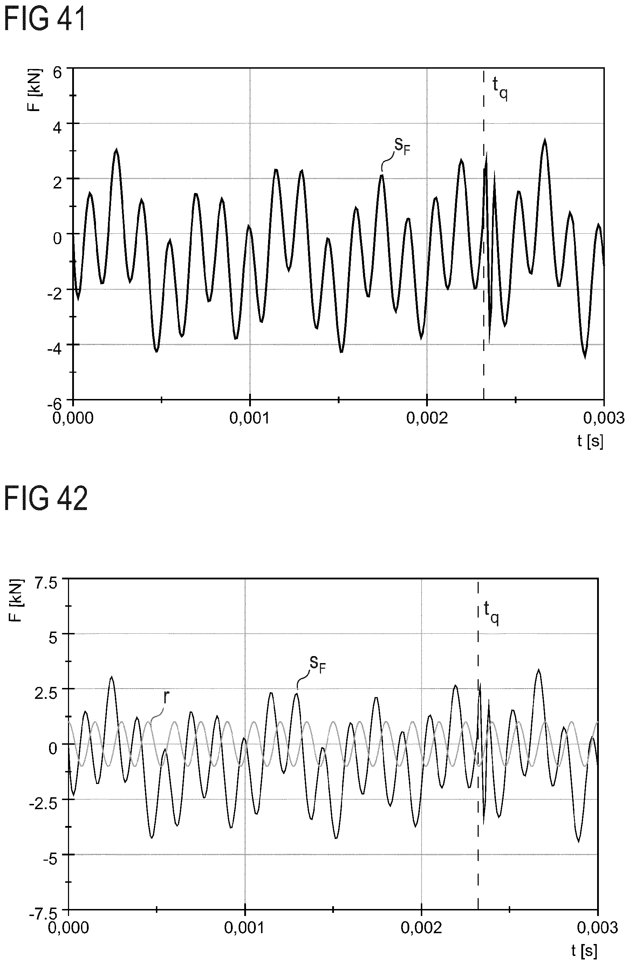

In der zeitlich höher aufgelösten Darstellung von Fig. 41 ist der Phasensprung zum Zeitpunkt $t_q$ des Auftretens der Querschnittsänderung bereits erkennbar.

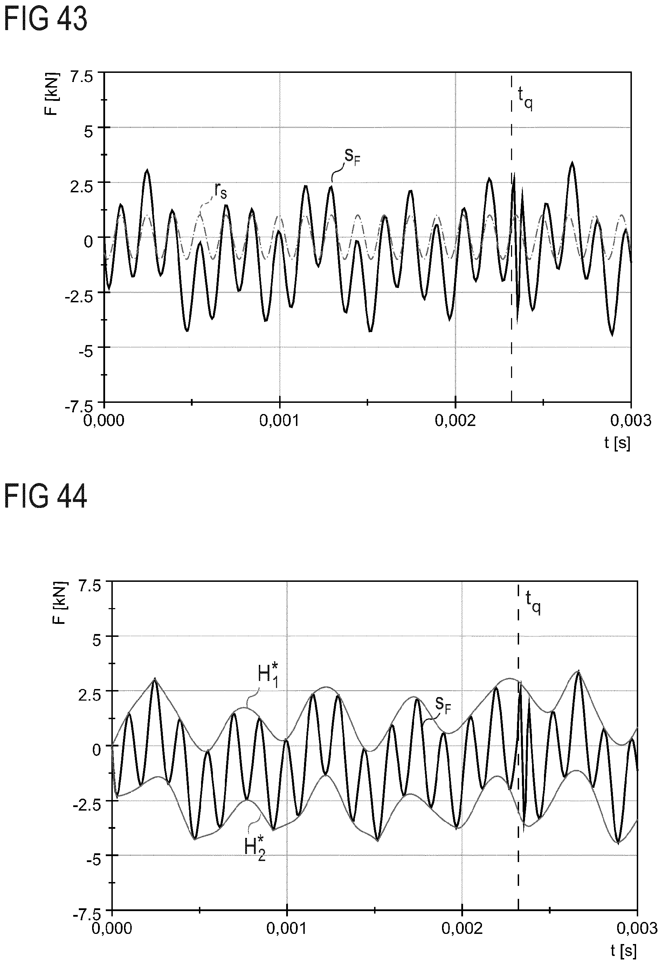

Zur Berechnung von $t_q$ wird typischerweise zunächst ein Referenzsignal r mit der Resonanzfrequenz der ungeprüften Probe und einer exemplarischen Amplitude 1 erzeugt (siehe Fig. 42) und dieses mit dem Signalfiltrat $S_F$ synchronisiert. Fig. 43 zeigt das Signalfiltrat $S_F$ und das synchronisierte Referenzsignal $r_s$.

Die Ermittlung der Phasenverschiebung $\tau$ zur Synchronisation des Referenzsignales r mit dem Signalfiltrat $S_F$ erfolgt typischerweise über die Berechnung der Kreuzkorrelation dieser beiden Signale in einem Zeitintervall vor dem (zunächst approximativ ermittelten) Auftreten des Phasensprunges. Das Referenzsignal wird dann durch zeitliche Verschiebung um $\tau$ nach links zum synchronisierten Referenzsignal $r_s$ erzeugt.

Zur Anpassung der Amplitude des synchronisierten Referenzsignales $r_s$ an das Signalfiltrat $S_F$ kann zunächst der Amplitudengang des das Signalfiltrates Sp ermittelt werden.

Dies kann über die Berechnung der Effektivwerte oder wie in Figur 44 gezeigt über die Berechnung von Hüllkurven erfolgen.

Dazu wurden zunächst eine obere und eine untere Hüllkurve des Signalfiltrats Sp berechnet und daraus durch jeweilige Berechnung eines nichtparametrischen Splines obere und untere geglättete Hüllkurven (Hüllkurven-Splines) H1* und H2* berechnet.

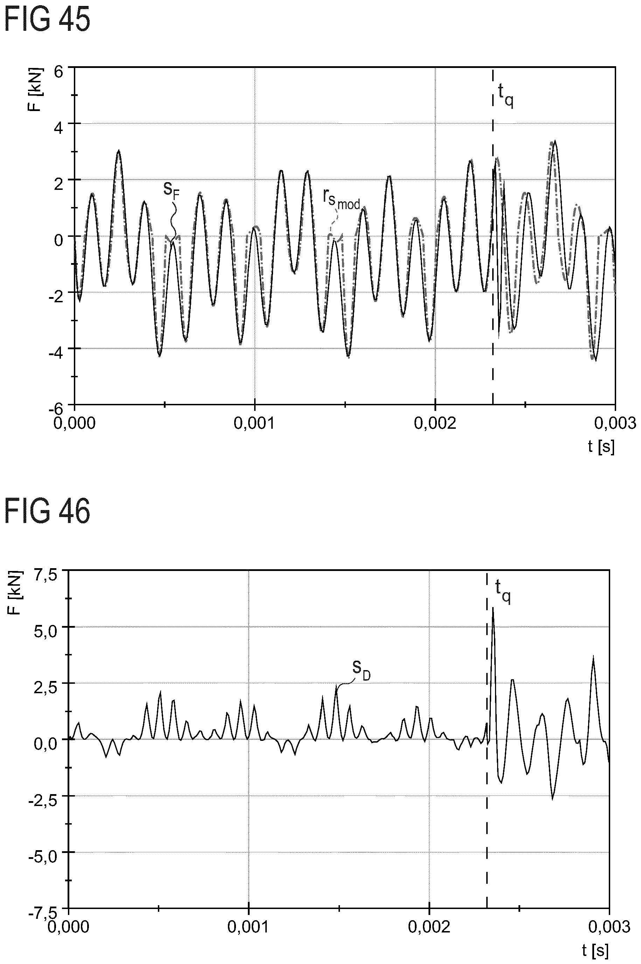

Die geglättete Hüllkurven $H_1$* und $H_2$* werden nun vorzeichenselektiv mit dem synchronisierten Referenzsignal Sp multipliziert (gefaltet), um das in Fig. 45 gezeigte modulierte und synchronisierte Referenzsignal $r_{Smod}$ zu berechnen. Dabei wird die Multiplikation der positiven $r_s$ - Werte mit $H_1$* und der negativen $r_s$ - Werte sowie bei $r_s = 0$ mit $H_2$* durchgeführt.

Danach kann zum Erzeugen des in Fig. 46 dargestellten Differenzsignal $S_D$ das modulierte und synchronisierte Referenzsignal $r_{Smod}$ vom Signalfiltrat $S_F$ subtrahiert werden ($S_D = S_F - f_{Smod}$).

Zur Berechnung von $t_q$ kann ein signifikanter Anstieg des Differenzsignales $S_D$ analysiert werden. Dies kann bspw. bei Überschreiten eines festgelegten Kraftschwellwertes bei zeitlich rückwirkender Korrektur des dadurch bestimmten Wertes $t_q$ realisiert werden.

Wie oben mit Bezug zur Fig. 8 bereits erläutert wurde (Block 1423 in Fig. 8), kann alternativ oder ergänzend auch ein zusätzlich aufgenommenes Beschleunigungssignal digital gefiltert und ausgewertet werden.

Dafür wird die Belastungsvorrichtung 6 der in Figur 1 gezeigte Vorrichtung zur dynamischen Belastungsprüfung zusätzlich mit einem Beschleunigungsaufnehmer (Signal BA in Fig. 47) mit einem typischen Messbereich von bis zu ca. 1.000 g oder sogar bis zu ca. 50.000 g ausgerüstet.

Außerdem wird der verwendete NF-DMS 5 während der dynamischen Belastungsprüfung typischerweise mit einer hohen Abtastfrequenz von mindestens 1 MHz oder sogar 2 MHz ausgelesen.

Da der NF-DMS und der Beschleunigungsaufnehmer systembedingt voneinander beabstandet sind, sind die Signale S des NF-DMS und BA des Beschleunigungsaufnehmers zunächst zu synchronisieren. Dies kann rechnerisch über die longitudinalen Schallgeschwindigkeiten und entsprechenden Längen der Kopplungsglieder und/oder experimentell erfolgen. Letzteres wird im Folgenden erläutert. Zur Synchronisation kann das NF-DMS-Signal selbst oder das Signal eines Einzel-DMS, einer DMS-Halbbrücke oder einer DMS-Vollbrücke, die jeweils an der Finne, dem Prüfstempel oder an der Probe appliziert sind herangezogen werden.

Der zeitliche Versatz $\Delta t$ zwischen den beiden Signalen kann aus der Differenz der ersten signifikanten Signaländerung der Signale BA und S (Signal eines Einzel-DMS an der Finne) bestimmt werden.

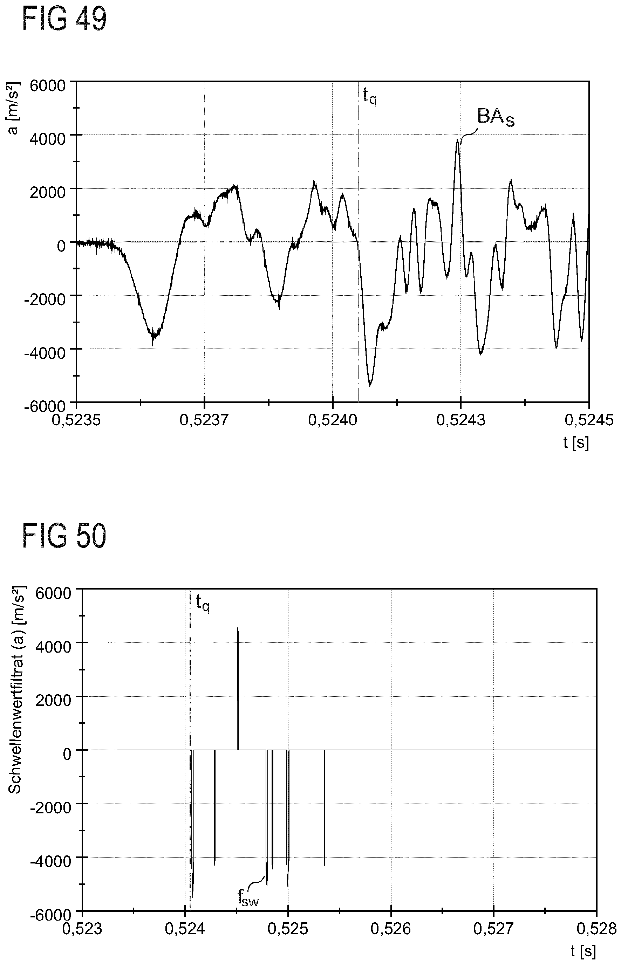

Die Figuren 48 und 49 zeigen mit unterschiedlicher Zeitauflösung das mit dem Signal eines Einzel-DMS an der Finne synchronisierte Signal $BA_S$ des Beschleunigungssensors, das durch Subtraktion der Zeitkanalwerte des Signals BA um den zeitlichen Versatz $\Delta t$ erhalten wurde. Wiederum ist der zu berechnende Änderungszeitpunkt $t_q$ jeweils schon mit eingezeichnet.

Zum Berechnen eines Schwellenwertfiltrats $f_{SW}$, wie es in Fig. 50 gezeigt wird, kann das synchronisierte Signal $BA_S$ des Beschleunigungssensors nun mit einem Schwellenwertfilter gefiltert werden. Die typischerweise symmetrisch zu Null gesetzten Filtergrenzen des Schwellenwertfilters hängen von der Probe und den Belastungskräften ab. Für Fig. 50 lag der untere Schwellenwert bei -4000 m/s$^2$ und der oberer Schwellenwert bei 4000 m/s$^2$. Deutlich wird am Schwellenwertfiltrat $f_{SW}$ ein starker negativer Beschleunigungspeak nahe dem Zeitpunkt des Einsetzens der Querschnittsänderung der Probe $t_q$.

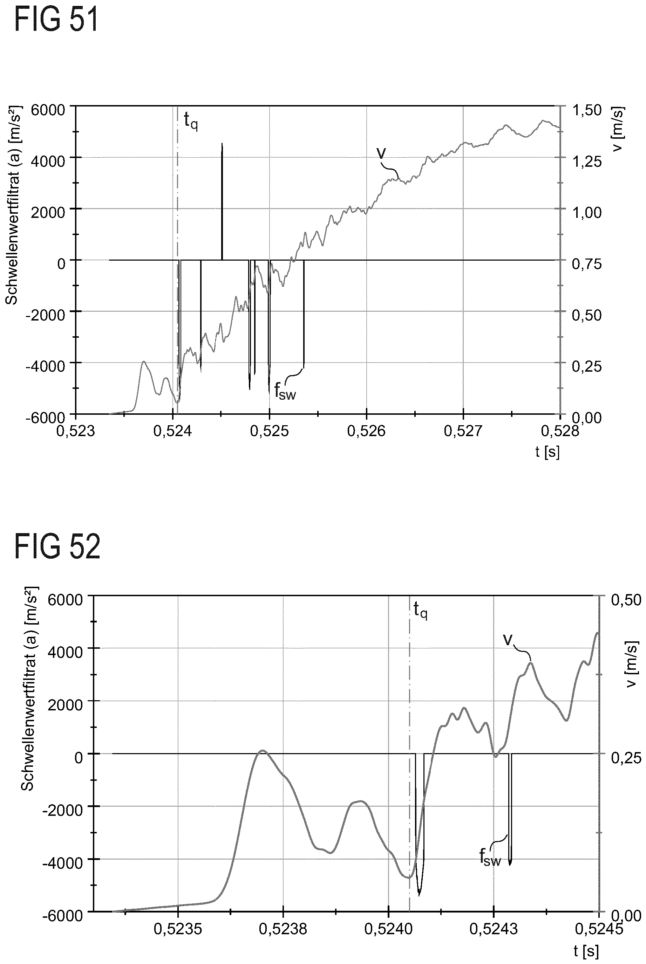

Durch Integration des synchronisierten Signales $BA_S$ nach der Zeit kann die in Fig. 52 dargestellte Geschwindigkeit v (Fallgeschwindigkeit der Fallmasse) berechnet werden.

Die Geschwindigkeit v weist am Zeitpunkt $t_q$ ein bei höherer zeitlicher Auflösung in Fig. 52 deutlich zu erkennendes lokales Minimum auf.

Dementsprechend lässt sich der Zeitpunkt der Querschnittsänderung der Probe $t_q$ an der Stelle des lokalen Minimums der aus der synchronisierten Beschleunigung der Fallmasse berechneten Fallgeschwindigkeit v nahe (wenige Nanosekunden) des größten Beschleunigungspeaks während der Belastungsphase bestimmen.

Gemäß einem Ausführungsbeispiel umfasst ein Prüfverfahren ein Messen und Registrieren eines zeitabhängigen Signals während eines dynamisches Belastens einer Probe, wobei das zeitabhängige Signal mit einer Formänderung und/oder einem Schwingungszustand der Probe korreliert ist, ein Bestimmen eines Filterparameters umfassend nummerisches Bestimmen von erwarteten Schwingungsmoden der Probe vor dem dynamisches Belasten und erwarteten Schwingungsmoden der Probe nach dem dynamisches Belasten, und Bestimmen eines Zeitpunktes, bei dem eine Querschnittsänderung der Biegeprobe während des dynamischen Belastens einsetzt, umfassend digitales Filtern des zeitabhängigen Signals unter Verwendung des Filterparameters.

Typischerweise umfasst das Bestimmen des Filterparameters ein Bestimmen eines Schwingungsmodenpaares umfassend eine erste erwartete Schwingungsmode der Probe vor dem dynamischen Belasten und eine der ersten erwarteten Schwingungsmode entsprechenden zweiten erwarteten Schwingungsmode der Probe nach dem dynamischen Belasten.

Gemäß einem Ausführungsbeispiel umfasst ein Verfahren zur dynamischen Belastungsprüfung ein Messen und Registrieren eines zeitabhängigen Signals während eines dynamischen Belastens einer Biegeprobe zum Erzeugen einer Querschnittsänderung, wobei das zeitabhängige Signal mit einer Formänderung der Biegeprobe während des dynamischen Belastens korreliert ist. Es wird ein Schwingungsmodenpaar und/oder eine Schwingungsmodenänderung bestimmt. Das Schwingungsmodenpaar umfassend eine erste Schwingungsmode der Biegeprobe vor der Querschnittsänderung und eine der ersten Schwingungsmode entsprechende und/oder mit der ersten Schwingungsmode korrespondierende zweite Schwingungsmode der Biegeprobe nach der Querschnittsänderung. Das Bestimmen des Schwingungsmodenpaars und/oder der Schwingungsmodenänderung umfasst eine jeweilige Modalanalyse für die Biegeprobe vor dem dynamischen Belasten und nach dem dynamischen Belasten. Das Schwingungsmodenpaar und/oder die Schwingungsmodenänderung werden zum Bestimmen mindestens eines Filterparameters verwendet. Es wird ein Zeitpunkt bestimmt, bei dem die Querschnittsänderung der Biegeprobe während des dynamischen Belastens einsetzt. Das Bestimmen des Zeitpunkts umfasst ein Filtern des zeitabhängigen Signals unter Verwendung des mindestens einen Filterparameters, typischerweise ein digitales Filtern des zeitabhängigen Signals unter Verwendung des mindestens einen Filterparameters.

Bei dem mindestens eines Filterparameters handelt es sich typischerweise um eine Frequenz (z.B. zwei Filterparameter, die einen Frequenzbereich für das (digitale) Filtern definieren), die in der Nähe einer Frequenz des Schwingungmodenpaares (Resonanzfrequenz) bzw. einer mittleren Frequenz, bei der die Schwingungsmodenänderung (z.B. eine Resonanzverschiebung) auftritt, liegt. Beispielsweise kann der jeweilige Filterparameter eine Frequenz im Bereich von 90% bis 110% der Resonanzfrequenz der jeweiligen Schwingungsmode sein. Außerdem umfasst der durch zwei Filterparameter definierte Frequenzbereich typischerweise sowohl die Resonanzfrequenz der ersten Schwingungsmode als auch die die Resonanzfrequenz der zweiten Schwingungsmode (den Bereich der Resonanzverschiebung). Der Frequenzbereich kann relativ eng sein, z.B. nach jeweils unten und oben nur bis zu 10% oder sogar nur bis zu 2% größer als der Bereich der Resonanzverschiebung, insbesondere maximal 200 Hz, maximal 100 Hz oder sogar nur maximal 50 Hz breit sein. Dadurch wird das (digitale) Filtern auf den interessanten Bereich beschränkt, was die nachfolgende Analyse erleichtert.

Typischerweise erfolgen die Modalanalysen numerisch, z.B. mittels einer jeweiligen FEM-Simulation. Die jeweilige Modalanalyse kann alternativ oder ergänzend auch experimentell erfolgen.

Insbesondere kann das Verfahren die folgenden Schritte umfassen: Dynamisches Belasten einer Biegeprobe zum Erzeugen einer Querschnittsänderung sowie Messen und Registrieren eines zeitabhängigen Signals während des dynamischen Belastens, wobei das zeitabhängige Signal (c) mit einer Formänderung der Biegeprobe korreliert ist; Durchführen mindestens einer experimentellen und mindestens einer numerisch, insbesondere einer simulativen Modalanalyse der Biegeprobe zum Bestimmen eines korrespondierenden Schwingungsmodenpaares umfassend eine erste charakteristische Schwingungsmode der Biegeprobe vor der Querschnittsänderung und eine der ersten charakteristischen Schwingungsmodenart entsprechende zweite Schwingungsmode der Biegeprobe nach der Querschnittsänderung; Verwenden des korrespondierenden Schwingungsmodenpaares zum Bestimmen mindestens eines Filterparameters, umfassend digitales und/oder analoges Filtern des zeitabhängigen Signals unter Verwendung des mindestens einen Filterparameters zum Bestimmen eines Signalfiltrats; und Bestimmen eines Zeitpunktes, bei dem eine Querschnittsänderung der Biegeprobe während des dynamischen Belastens einsetzt durch Auswerten des Signalfiltrates des zeitabhängigen Signals.

Typischerweise umfasst die Querschnittsänderung beim dynamischen Belasten eine Rissbildung und/oder ein Risswachstum.

Typischerweise umfasst das Verfahren weiter ein Bestimmen einer zum Zeitpunkt, bei dem die Querschnittsänderung der Biegeprobe einsetzt, auf die Biegeprobe wirkenden Kraft.

Typischerweise umfasst das Verfahren weiter ein Bestimmen eines bruchmechanischen Materialkennwerts unter Verwendung der zum Zeitpunkt, bei dem die Querschnittsänderung der Biegeprobe einsetzt, auf die Biegeprobe wirkenden Kraft.

Die vorliegende Erfindung wurde anhand von Ausführungsbeispielen erläutert. Diese Ausführungsbeispiele sollen keinesfalls als einschränkend für die vorliegende Erfindung verstanden werden. Insbesondere können einzelne Merkmale der verschiedenen Ausführungsbeispiele in andere Ausführungsformen übernommen werden oder verschiedene Ausführungsbeispiele miteinander kombiniert werden, solange sich die kombinierten Merkmale nicht technisch bedingt gegenseitig ausschließen.

**Patentansprüche**

1.  Verfahren zur dynamischen Belastungsprüfung, umfassend:

    - Dynamisches Belasten einer Biegeprobe (1) zum mit einer Querschnittsänderung der Biegeprobe (1) einhergehenden Bilden und/oder Vergrößern eines Risses sowie Messen und Registrieren eines zeitabhängigen Signals (c) während des dynamischen Belastens, wobei das zeitabhängige Signal (c) mit einer Formänderung der Biegeprobe (1) korreliert ist;
    - Bestimmen eines Schwingungsmodenpaares umfassend eine erste Schwingungsmode der Biegeprobe (1) vor der Querschnittsänderung und eine der ersten Schwingungsmode entsprechende zweite Schwingungsmode der Biegeprobe (1) nach der Querschnittsänderung;
    - Verwenden des Schwingungsmodenpaares zum Bestimmen eines Frequenzintervalls als Filterparameter so, dass eine Resonanzfrequenz der ersten Schwingungsmode und/oder eine Resonanzfrequenz der zweiten Schwingungsmode in dem Frequenzintervall liegt; und
    - Bestimmen eines Zeitpunktes ($t_q$), bei dem die Querschnittsänderung der Biegeprobe (1) während des dynamischen Belastens einsetzt, umfassend Filtern des zeitabhängigen Signals (c) unter Verwendung des Filterparameters.

2.  Verfahren nach Anspruch 1, wobei eine Modenart der ersten Schwingungsmode mit einer Modenart der zweiten Schwingungsmode übereinstimmt.

**3.** Verfahren nach Anspruch 1 oder 2, wobei das Bestimmen des Schwingungsmodenpaares Folgendes umfasst:

- Numerisches Bestimmen von ersten erwarteten Schwingungsmoden und/oder ersten erwarteten Schwingungsspektren für die Biegeprobe (1) vor dem dynamischen Belasten;
- Numerisches Bestimmen von zweiten erwarteten Schwingungsmoden und/oder zweiten erwarteten Schwingungsspektren für die Biegeprobe (1) nach dem dynamischen Belasten;
- Vergleichen der ersten erwarteten Schwingungsmoden mit den zweiten erwarteten Schwingungsmoden;
- Auswahl einer der ersten erwarteten Schwingungsmoden und einer der zweiten erwarteten Schwingungsmoden als Schwingungsmodenpaar;
- Messen und Registrieren eines ersten Schwingungssignals der Biegeprobe (1) vor dem dynamischen Belasten;
- Bestimmen von ersten gemessenen Schwingungsmoden im ersten Schwingungssignal;
- Messen und Registrieren eines zweiten Schwingungssignals der Biegeprobe (1) nach dem dynamischen Belasten;
- Bestimmen von zweiten gemessenen Schwingungsmoden im zweiten Schwingungssignal;
- Auswahl einer der ersten gemessenen Schwingungsmoden und einer der zweiten gemessenen Schwingungsmoden als Schwingungsmodenpaar;
- Vergleichen der ersten erwarteten Schwingungsmoden mit den ersten gemessenen Schwingungsmoden;
- Erneutes numerisches Bestimmen der ersten erwarteten Schwingungsmoden;
- Vergleichen der zweiten erwarteten Schwingungsmoden mit den zweiten gemessenen Schwingungsmoden;
- Erneutes numerisches Bestimmen der zweiten erwarteten Schwingungsmoden;
- mindestens eine numerische Simulation eines Schwingungsverhaltens der Biegeprobe (1);
- eine FEM-Simulation des Schwingungsverhaltens der Biegeprobe (1);
- eine Modalanalyse der Biegeprobe;
- Bestimmen einer Frequenzverschiebung im Biegeschwingungsspektrum der Biegeprobe (1) nach dem dynamischen Belasten relativ zum Biegeschwingungsspektrum der Biegeprobe (1) vor dem dynamischen Belasten;
- Bestimmen einer Schwingungsmodenänderung;
- Bestimmen einer Frequenzverschiebung zwischen Schwingungsmoden vor und nach dem dynamischen Belasten; und/oder

- Bestimmen einer Schwingungsmodenänderung.

**4.** Verfahren nach einem der vorangehenden Ansprüche, wobei das Filtern des zeitabhängigen Signals (c) digital erfolgt, wobei das Filtern des zeitabhängigen Signals (c) ein digitales Filtern des zeitabhängigen Signals (c) umfasst, wobei durch das Filtern des zeitabhängigen Signals (c) ein Signalfiltrat erzeugt wird, wobei das Bestimmen des Zeitpunktes ($t_q$), bei dem die Querschnittsänderung der Biegeprobe (1) während des dynamischen Belastens einsetzt, ein Auswerten des Signalfiltrats umfasst, wobei die Modalanalyse der Biegeprobe eine experimentelle und/oder eine numerische und/oder eine simulative Modalanalyse der Biegeprobe vor dem dynamischen Belasten der Biegeprobe (1) umfasst, und/oder wobei die Modalanalyse der Biegeprobe eine weitere experimentelle und/oder eine weitere numerische und/oder eine weitere simulative Modalanalyse der Biegeprobe nach dem dynamischen Belasten der Biegeprobe (1) umfasst.

**5.** Verfahren nach einem der vorangehenden Ansprüche, wobei zum Messen und Registrieren des zeitabhängigen Signals (c), zum Messen und Registrieren des ersten Schwingungssignals und/oder zum Messen und Registrieren des zweiten Schwingungssignals mindestens ein gemeinsamer Sensor (4, 5) verwendet wird.

**6.** Verfahren nach einem der vorangehenden Ansprüche, wobei das zeitabhängige Signal (c) eine Dehnung der Biegeprobe (1) als Funktion einer Zeit (t), eine Durchbiegung der Biegeprobe (1) als Funktion einer Zeit (t), eine Beschleunigung als Funktion der Zeit (t) oder eine Biegekraft als Funktion einer Zeit (t) ist.

**7.** Verfahren nach einem der vorangehenden Ansprüche, weiter umfassend Auflagern der Biegeprobe (1) an zwei Stellen vor dem dynamischen Belasten der Biegeprobe (1), und / oder Erzeugen einer Kerbe (8) in der Biegeprobe (1) vor dem dynamischen Belasten der Biegeprobe (1).

**8.** Verfahren nach einem der vorangehenden Ansprüche, wobei das Belasten der Biegeprobe zu einer irreversiblen Querschnittsänderung der Biegeprobe (1) führt, wobei das Belasten der Biegeprobe (1) schlag- bzw. impulsartig erfolgt, und/oder wobei das zeitabhängige Signal (c), das erste Schwingungssignals und/oder das zweite Schwingungssignals mit einer Rate von zumindest 1 kHz gemessen und registriert werden.

**9.** Verfahren nach einem der vorangehenden Ansprüche, wobei das Bestimmen des mindestens einen Filterparameters mindestens einen der folgenden Schritte umfasst:

- Bestimmen einer ersten unteren Filterfrequenz die kleiner als eine Resonanzfrequenz der ersten Schwingungsmode ist;
- Bestimmen einer zweiten unteren Filterfrequenz die kleiner als eine Resonanzfrequenz der zweiten Schwingungsmode ist;
- Bestimmen einer ersten oberen Filterfrequenz die größer als die Resonanzfrequenz der ersten Schwingungsmode ist; und
- Bestimmen einer zweiten oberen Filterfrequenz die größer die Resonanzfrequenz der zweiten Schwingungsmode ist.

**10.** Verfahren nach Anspruch 9, wobei das Filtern mindestens einen der folgenden Schritte umfasst:

- Filtern des zeitabhängigen Signals (c) mit einem Bandpass-Filter, wobei das Frequenzintervalls als Filterparameter verwendet werden, zum Bilden eines Bandpassfiltrats, Gleichrichten des Bandpassfiltrats zum Bilden eines gleichgerichteten Bandpassfiltrats, und Analysieren des gleichgerichteten Bandpassfiltrats zum Bestimmen des Zeitpunktes, bei dem eine Querschnittsänderung der Biegeprobe während des dynamischen Belastens einsetzt;
- Filtern des zeitabhängigen Signals mit einem Bandpass-Filter mit der ersten unteren Filterfrequenz und der ersten oberen Filterfrequenz als Filterparameter zum Bilden eines ersten Filtrats;
- Gleichrichten des ersten Filtrats zum Bilden eines gleichgerichteten ersten Filtrats;
- Bestimmen des Zeitpunktes im gleichgerichteten ersten Filtrat als Zeit, bei der das gleichgerichtete erste Filtrat ein erstes lokales Minimum aufweist;
- Filtern des zeitabhängigen Signals mit einem Bandpass-Filter mit der ersten unteren Filterfrequenz und der ersten oberen Filterfrequenz als Filterparameter zum Bilden eines ersten Filtrats;
- Gleichrichten des ersten Filtrats zum Bilden eines gleichgerichteten ersten Filtrats; und
- Bestimmen des Zeitpunktes im gleichgerichteten ersten Filtrat als Zeit, bei der das gleichgerichtete erste Filtrat ein erstes lokales Minimum aufweist.

**11.** Verfahren nach einem der vorangehenden Ansprüche, weiter umfassend:

- Bestimmen einer zum Zeitpunkt ($t_q$) auf die Biegeprobe (1) wirkenden Kraft (F);
- Bestimmen eines Betrags der Querschnittsänderung ($\Delta q$) nach dem dynamischen Belasten;
- Bestimmen eines bruchmechanischen Materialkennwerts unter Verwendung der zum Zeitpunkt ($t_q$) auf die Biegeprobe (1) wirkenden Kraft (F($t_q$));
- Bestimmen eines Betrages einer Durchbiegung (w) der Biegeprobe (1); und /oder
- Bestimmen einer während des dynamisches Belasten an der Biegeprobe (1) bis zum Zeitpunkt ($t_q$) verrichteten Biegearbeit (W), typischerweise mittels einer numerischer Integration der auf die Biegeprobe wirkenden Kraft (F) gemäß der Formel

$$ W = \int_{t_0}^{t_q} F\big(w(t)\big)dw. $$

**12.** Vorrichtung (100) zur dynamischen Belastungsprüfung einer Biegeprobe (1), umfassend:

- eine Probenaufnahme (2) zur Lagerung der Biegeprobe (1);
- eine Belastungsvorrichtung (6), die eingerichtet ist, die in der Probenaufnahme (2) gelagerte Biegeprobe (1) mit einer Biegekraft (F) dynamisch zu belasten;
- einen Sensor (4, 5), der eingerichtet eine Messgröße zu messen, die mit einer Formänderung der in der Probenaufnahme (2) gelagerten Biegeprobe (1) korreliert ist; und
- eine Steuer- und Auswerteeinheit (50), die mit der Belastungsvorrichtung (6) und dem Sensor (4, 5) gekoppelt ist und eingerichtet ist:
- die Biegeprobe (1) zum mit einer Querschnittsänderung der Biegeprobe (1) einhergehenden Bilden und/oder Vergrößern eines Risses mittels der Belastungsvorrichtung (6) dynamisch mit der Biegekraft (F) zu belasten und dabei die Messgröße als ein zeitabhängiges Signal (c) zu registrieren;
- ein Schwingungsmodenpaar umfassend eine erste Schwingungsmode der Biegeprobe (1) vor der Querschnittsänderung und eine der ersten Schwingungsmode entsprechende zweite Schwingungsmode der Biegeprobe (1) nach der Querschnittsänderung zum Bestimmen eines Frequenzintervalls als Filterparameter zu verwenden so, dass eine Resonanzfrequenz der ersten Schwingungsmode und/oder eine Resonanzfrequenz der zweiten Schwingungsmode in dem Frequenzintervall liegt; und
- das zeitabhängige Signals (c) unter Verwendung des mindestens einen Filterparameters zu filtern, um einen Zeitpunkt ($t_q$), bei dem die Querschnittsänderung der Biegeprobe (1) während des dynamischen Belastens einsetzt, zu bestimmen.

**13.** Vorrichtung (100) nach Anspruch 12, wobei die Belastungsvorrichtung (6) ein geführtes Fallwerk, ein freies Fallwerk oder ein Pendelschlagwerk umfasst.

**14.** Vorrichtung (100) nach einem der Anspruch 12 oder 13, wobei der Sensor ein durchbiegungsschwingungsproportionaler Sensor ist, und/oder wobei die Vorrichtung einen kalibrierbaren Kraftsensor aufweist.

**15.** Vorrichtung (100) nach einem der Ansprüche 12 bis 14, wobei die Steuer- und Auswerteeinheit (50) eingerichtet ist, das zeitabhängige Signal (c) digital zu filtern, und/oder wobei die Steuer- und Auswerteeinheit (50) eingerichtet ist, ein Verfahren nach einem der Ansprüche 1 bis 11 auszuführen.

**Claims**

**1.** A method for dynamic load testing, comprising:

- applying a dynamic load to a bending specimen (1) for forming and/or increasing a crack, which is accompanied by a change in cross-section of the bending specimen (1), and measuring and recording a time-dependent signal (c) during applying the dynamic load, the time-dependent signal (c) correlating with a change in shape of the bending specimen (1);
- determining a vibration mode pair, comprising a first vibration mode of the bending specimen (1) prior to the change in cross-section, and a second vibration mode of the bending specimen (1) after the change in cross-section and corresponding to the first vibration mode;
- using the vibration mode pair for determining a frequency interval as a filter parameter in such a way that a resonant frequency of the first vibration mode and/or a resonant frequency of the second vibration mode lies within the frequency interval; and
- determining a point in time ($t_q$) at which the change in cross-section of the bending specimen (1) sets in during applying the dynamic load, comprising filtering the time-dependent signal (c) using the filter parameter.

**2.** The method according to claim 1, wherein a mode type of the first vibration mode corresponds to a mode type of the second vibration mode.

**3.** The method according to claim 1 or 2, wherein the determining the vibration mode pair comprises:

- numerically determining first expected vibration modes and/or first expected vibration spectra for the bending specimen (1) prior to applying the dynamic load;

- numerically determining second expected vibration modes and/or second expected vibration spectra for the bending specimen (1) after applying the dynamic load;
- comparing the first expected vibration modes to the second expected vibration modes;
- selecting one of the first expected vibration modes and one of the second expected vibration modes as the vibration mode pair;
- measuring and recording a first vibration signal of the bending specimen (1) prior to applying the dynamic load;
- determining first measured vibration modes in the first vibration signal;
- measuring and recording a second vibration signal of the bending specimen (1) after applying the dynamic load;
- determining second measured vibration modes in the second vibration signal;
- selecting one of the first measured vibration modes and one of the second measured vibration modes as the vibration mode pair;
- comparing the first expected vibration modes to the first measured vibration modes;
- again numerically determining the first expected vibration modes;
- comparing the second expected vibration modes to the second measured vibration modes;
- again numerically determining the second expected vibration modes;
- carrying out at least one numerical simulation of a vibration behavior of the bending specimen (1);
- carrying out a FEM simulation of the vibration behavior of the bending specimen (1);
- carrying out a modal analysis of the bending specimen;
- determining a frequency shift in the bending vibration spectrum of the bending specimen (1) after applying the dynamic load relative to the bending vibration spectrum of the bending specimen (1) prior to applying the dynamic load;
- determining a vibration mode change;
- determining a frequency shift between vibration modes prior to and after applying the dynamic load; and/or
- determining a vibration mode change.

**4.** The method according to any one of the preceding claims, wherein the filtering of the time-dependent signal (c) is carried out digitally, wherein the filtering of the time-dependent signal (c) comprising a digital filtering of the time-dependent signal (c), wherein a signal filtrate is generated as a result of the filtering of the time-dependent signal (c), wherein the determination of the point in time ($t_q$) at which the change in cross-section of the bending specimen (1) sets in during applying the dynamic load comprises evaluating the signal filtrate, wherein the modal analysis of the bending specimen comprises an experimental and/or a numerical and/or a simulative modal analysis of the bending specimen prior to applying the dynamic load to the bending specimen (1), and/or wherein the modal analysis of the bending specimen comprises a further experimental and/or a further numerical and/or a further simulative modal analysis of the bending specimen after applying the dynamic load application to the bending specimen (1).

5. The method according to any one of the preceding claims, wherein at least one common sensor (4, 5) is used for measuring and recording the time-dependent signal (c), for measuring and recording the first vibration signal and/or for measuring and recording the second vibration signal.

6. The method according to any one of the preceding claims, wherein the time-dependent signal (c) is a strain of the bending specimen (1) as a function of a time (t), a deflection of the bending specimen (1) as a function of a time (t), an acceleration as a function of the time (t) or a bending force as a function of a time (t).

7. The method according to any one of the preceding claims, further comprising supporting the bending specimen (1) in two locations prior to applying the dynamic load to the bending specimen (1), and/or creating a notch (8) in the bending specimen (1) prior to applying the dynamic load to the bending specimen (1).

8. The method according to any one of the preceding claims, wherein applying the dynamic load to the bending specimen results in an irreversible change in the cross-section of the bending specimen (1), the load being applied to the bending specimen (1) in an impact-like or pulsating manner, and/or wherein the time-dependent signal (c), the first vibration signal and/or the second vibration signal are measured and recorded using a rate of at least 1 kHz.

9. The method according to any one of the preceding claims, wherein determining the at least one filter parameter comprises at least one of:

 - determining a first lower filter frequency that is smaller than a resonant frequency of the first vibration mode;
 - determining a second lower filter frequency that is smaller than a resonant frequency of the second vibration mode;
 - determining a first upper filter frequency that is greater than the resonant frequency of the first vibration mode; and
 - determining a second upper filter frequency that is greater than the resonant frequency of the second vibration mode.

10. The method according to claim 9, wherein the filtering comprises at least one of:

 - filtering the time-dependent signal (c) with a bandpass filter, the frequency interval being used as a filter parameter, for forming a bandpass filtrate, rectifying the bandpass filtrate for forming a rectified bandpass filtrate, and analyzing the rectified bandpass filtrate for determining the point in time at which a change in cross-section of the bending specimen sets in during applying the dynamic load;
 - filtering the time-dependent signal with a bandpass filter using the first lower filter frequency and the first upper filter frequency as filter parameters for forming a first filtrate;
 - rectifying the first filtrate for forming a rectified first filtrate;
 - determining the point in time in the rectified first filtrate as the time at which the rectified first filtrate has a first local minimum;
 - filtering the time-dependent signal with a bandpass filter using the first lower filter frequency and the first upper filter frequency as filter parameters for forming a first filtrate;
 - rectifying the first filtrate for forming a rectified first filtrate; and
 - determining the point in time in the rectified first filtrate as the time at which the rectified first filtrate has a first local minimum.

11. The method according to any one of the preceding claims, further comprising:

 - determining a force (F) acting on the bending specimen (1) at the point in time ($t_q$);
 - determining a magnitude of the change in cross-section ($\Delta q$) after applying the dynamic load;
 - determining a fracture-mechanical material characteristic value using the force ($F(t_q)$) acting on the bending specimen (1) at the point in time ($t_q$);
 - determining a magnitude of a deflection (w) of the bending specimen (1); and/or
 - determining a bending work (W) carried out at the bending specimen (1) during applying the dynamic load until the point in time ($t_q$), typically by way of a numerical integration of the force (F) acting on the bending specimen according to the formula

$$W = \int_{t_0}^{t_q} F\big(w(t)\big)\,dw.$$

**12.** A device (100) for the dynamic load testing of a bending specimen (1), comprising:

- a specimen holder (2) for mounting the bending specimen (1).
- a load application device (6) which is configured to dynamically load the bending specimen (1) mounted in the specimen holder (2) with a bending force (F);
- a sensor (4, 5) which is configured to measure a measuring variable correlated with a change in shape of the bending specimen (1) mounted in the specimen holder (2); and
- a control and evaluation unit (50), which is coupled to the load application device (6) and the sensor (4, 5), and configured:
- to dynamically load the bending specimen (1) with the bending force (F) by means of the load application device (6) for forming and/or increasing a crack, which is accompanied by a change in cross-section of the bending specimen (1), and, in the process, record the measuring variable as a time-dependent signal (c);
- to use a vibration mode pair comprising a first vibration mode of the bending specimen (1) prior to the change in cross-section, and a second vibration mode of the bending specimen (1) after the change in cross-section and corresponding to the first vibration mode for determining a frequency interval used as a filter parameter in such a way that a resonant frequency of the first vibration mode and/or a resonant frequency of the second vibration mode lies within the frequency interval; and
- to filter the time-dependent signal (c) using the at least one filter parameter to determine a point in time ($t_q$) at which the change in cross-section of the bending specimen (1) sets in during dynamically loading.

**13.** The device (100) according to claim 12, wherein the load application device (6) comprises a guided drop-weight impact system, a free drop-weight impact system or an impact pendulum system.

**14.** The device (100) according to either claim 12 or 13, wherein the sensor is a deflection vibration proportional sensor, and/or wherein the device comprises a calibratable force sensor.

**15.** The device (100) according to any one of claims 12 to 14, wherein the control and evaluation unit (50) is configured to digitally filter the time-dependent signal (c), and/or wherein the control and evaluation unit (50) is configured to carry out a method according to any one of claims 1 to 11.

**Revendications**

**1.** Procédé d'essai dynamique de charge, comprenant :

- le chargement dynamique d'une éprouvette pour essai de flexion (1) pour former et/ou agrandir une fissure associée à une modification de la section transversale de l'éprouvette pour essai de flexion (1), et une mesure et un enregistrement d'un signal (c) variant dans le temps pendant le chargement dynamique, le signal (c) variant dans le temps étant corrélé à une modification de forme de l'éprouvette pour essai de flexion (1) ;
- la détermination d'une paire de modes de vibration comprenant un premier mode de vibration de l'éprouvette pour essai de flexion (1) avant la modification de la section transversale, et un deuxième mode de vibration, correspondant au premier mode de vibration, de l'éprouvette pour essai de flexion (1) après la modification de la section transversale ;
- l'utilisation de la paire de modes de vibration pour déterminer un intervalle de fréquence comme paramètre de filtrage de telle sorte qu'une fréquence de résonance du premier mode de vibration et/ou une fréquence de résonance du deuxième mode de vibration se situe dans l'intervalle de fréquence ; et
- la détermination d'un instant ($t_q$) auquel la modification de la section transversale de l'éprouvette pour essai de flexion (1) commence pendant le chargement dynamique, comprenant le filtrage du signal (c) variant dans le temps avec utilisation du paramètre de filtrage.

**2.** Procédé selon la revendication 1, un type de mode du premier mode de vibration coïncidant avec un type de mode du deuxième mode de vibration.

**3.** Procédé selon la revendication 1 ou 2, la détermination de la paire de modes de vibration comprenant :

- la détermination numérique de premiers modes de vibration attendus et/ou de premiers spectres de vibration attendus pour l'éprouvette pour essai de flexion (1) avant le chargement dynamique ;
- la détermination numérique de deuxièmes modes de vibration attendus et/ou de deuxièmes spectres de vibration attendus pour l'éprouvette pour essai de flexion (1) après le chargement dynamique ;
- la comparaison des premiers modes de vibration attendus avec les deuxièmes modes de vibration attendus ;

- la sélection d'un des premiers modes de vibration attendus et d'un des deuxièmes modes de vibration attendus en tant que paire de modes de vibration ;

- la mesure et l'enregistrement d'un premier signal de vibration de l'éprouvette pour essai de flexion (1) avant le chargement dynamique ;

- la détermination de premiers modes de vibration mesurés dans le premier signal de vibration ;

- la mesure et l'enregistrement d'un deuxième signal de vibration de l'éprouvette pour essai de flexion (1) après le chargement dynamique ;

- la détermination de deuxièmes modes de vibration mesurés dans le deuxième signal de vibration ;

- la sélection d'un des premiers modes de vibration mesurés et d'un des deuxièmes modes de vibration mesurés en tant que paire de modes de vibration ;

- la comparaison des premiers modes de vibration attendus avec les premiers modes de vibration mesurés ;

- la détermination numérique renouvelée des premiers modes de vibration attendus ;

- la comparaison des deuxièmes modes de vibration attendus avec les deuxièmes modes de vibration mesurés ;

- la détermination numérique renouvelée des deuxièmes modes de vibration attendus ;

- au moins une simulation numérique d'un comportement en vibration de l'éprouvette pour essai de flexion (1) ;

- une simulation FEM du comportement en vibration de l'éprouvette pour essai de flexion (1) ;

- une analyse modale de l'éprouvette pour essai de flexion ;

- la détermination d'un décalage de fréquence dans le spectre de vibration de flexion de l'éprouvette pour essai de flexion (1) après le chargement dynamique par rapport au spectre de vibration de flexion de l'éprouvette pour essai de flexion (1) avant le chargement dynamique ;

- la détermination d'une modification de mode de vibration ;

- la détermination d'un décalage de fréquence entre des modes de vibration avant et après le chargement dynamique ; et/ou

- la détermination d'une modification de mode de vibration.

4. Procédé selon l'une des revendications précédentes, le filtrage du signal (c) variant dans le temps s'effectuant de façon numérique, le filtrage du signal (c) variant dans le temps comprenant un filtrage numérique du signal (c) variant dans le temps, un filtrat de signal étant produit par le filtrage du signal (c) variant dans le temps, la détermination de l'instant

($t_q$) auquel la modification de la section de l'éprouvette pour essai de flexion (1) commence pendant le chargement dynamique comprenant une analyse du filtrat de signal, l'analyse modale de l'éprouvette pour essai de flexion comprenant une analyse modale expérimentale et/ou une analyse modale numérique et/ou une analyse modale simulée de l'éprouvette pour essai de flexion avant le chargement dynamique à l'éprouvette pour essai de flexion (1), et/ou l'analyse modale de l'éprouvette pour essai de flexion comprenant une autre analyse modale expérimentale et/ou une autre analyse modale numérique et/ou une autre analyse modale simulée de l'éprouvette pour essai de flexion après le chargement dynamique à l'éprouvette pour essai de flexion (1).

5. Procédé selon l'une des revendications précédentes, au moins un capteur (4, 5) commun étant utilisé pour la mesure et l'enregistrement du signal (c) variant dans le temps, pour la mesure et l'enregistrement du premier signal de vibration et/ou pour la mesure et l'enregistrement du deuxième signal de vibration.

6. Procédé selon l'une des revendications précédentes, le signal (c) variant dans le temps étant un allongement de l'éprouvette pour essai de flexion (1) en fonction d'un temps (t), une déflexion de l'éprouvette pour essai de flexion (1) en fonction d'un temps (t), une accélération en fonction du temps (t) ou une force de flexion en fonction d'une temps (t).

7. Procédé selon l'une des revendications précédentes, comprenant également la mise en appui de l'éprouvette pour essai de flexion (1) dans deux endroits avant le chargement dynamique à l'éprouvette pour essai de flexion (1), et/ou la production d'une entaille (8) dans l'éprouvette pour essai de flexion (1) avant le chargement dynamique à l'éprouvette pour essai de flexion (1).

8. Procédé selon l'une des revendications précédentes, le chargement à l'éprouvette pour essai de flexion conduisant à une modification irréversible de la section transversale de l'éprouvette pour essai de flexion (1), le chargement dynamique à l'éprouvette pour essai de flexion (1) s'effectuant par chocs ou respectivement par impulsions, et/ou le signal (c) variant dans le temps, le premier signal de vibration et/ou le deux deuxième signal de vibration étant mesurés et enregistrés à une fréquence d'au moins 1 kHz.

9. Procédé selon l'une des revendications précédentes, la détermination du paramètre de filtrage au moins au nombre de un comprenant au moins une des étapes suivantes :

- la détermination d'une première fréquence de filtrage inférieure qui est inférieure à une fréquence de résonance du premier mode de vibration ;
- la détermination d'une deuxième fréquence de filtrage inférieure qui est inférieure à une fréquence de résonance du deuxième mode de vibration ;
- la détermination d'une première fréquence de filtrage supérieure qui est supérieure à la fréquence de résonance du premier mode de vibration ;
- la détermination d'une deuxième fréquence de filtrage supérieure qui est supérieure à la fréquence de résonance du deuxième mode de vibration.

10. Procédé selon la revendication 9, le filtrage comprenant au moins une des étapes suivantes :

- le filtrage du signal (c) variant dans le temps avec un filtre passe-bande, l'intervalle de fréquence étant utilisé comme paramètre de filtrage pour la formation d'un filtrat passe-bande, une rectification du filtrat passe-bande pour la formation d'un filtrat passe-bande rectifié, et une analyse du filtrat passe-bande rectifié pour la détermination de l'instant auquel une modification de la section transversale de l'éprouvette pour essai de flexion commence pendant le chargement dynamique ;
- le filtrage du signal variant dans le temps avec un filtre passe-bande avec la première fréquence de filtrage inférieure et la première fréquence de filtrage supérieure en tant que paramètres de filtrage pour la formation d'un premier filtrat ;
- la rectification du premier filtrat pour la formation d'un premier filtrat rectifié ;
- la détermination de l'instant dans le premier filtrat rectifié en tant que temps auquel le premier filtrat rectifié présente un minimum local ;
- le filtrage du signal variant dans le temps avec un filtre passe-bande avec la première fréquence de filtrage inférieure et la première fréquence de filtrage supérieure en tant que paramètres de filtrage pour la formation d'un premier filtrat ;
- la rectification du premier filtrat pour la formation d'un premier filtrat rectifié ; et
- la détermination de l'instant dans le premier filtrat redressé en tant que temps auquel le premier filtrat redressé présente un premier minimum local.

11. Procédé selon l'une des revendications précédentes, comprenant également :

- la détermination d'une force (F) agissant sur l'éprouvette pour essai de flexion (1) à l'instant ($t_q$) ;
- la détermination d'une quantité de la modification de la section transversale ($\triangle q$) après le chargement dynamique ;
- la détermination d'une caractéristique de matériau en matière de mécanique de rupture avec utilisation de la force ($F_{(tq)}$) agissant sur l'éprouvette pour essai de flexion (1) à l'instant ($t_q$) ;
- la détermination d'une quantité de déviation (w) de l'éprouvette pour essai de flexion (1) ; et/ou
- la détermination d'un travail de flexion (W) exécuté pendant le chargement dynamique à l'éprouvette pour essai de flexion (1) jusqu'à l'instant ($t_q$), typiquement au moyen d'une intégration numérique de la force (F) agissant sur l'éprouvette pour essai de flexion selon la formule

$$W = \int_{t_0}^{t_q} F\big(w(t)\big)dw.$$

12. Dispositif (100) d'essai dynamique de charge d'une éprouvette pour essai de flexion (1), comprenant :

- un logement d'éprouvette (2) pour la mise en place de l'éprouvette pour essai de flexion (1) ;
- un dispositif de chargement (6) qui est agencé pour appliquer un chargement dynamique avec une force de flexion (F) à l'éprouvette pour essai de flexion (1) mise en place dans le logement d'éprouvette (2) ;
- un capteur (4, 5) qui est agencé pour mesurer une grandeur de mesure qui est corrélée à une modification de forme de l'éprouvette pour essai de flexion (1) mise en place dans le logement d'éprouvette (2) ; et
- une unité de commande et d'analyse (50) qui est couplée au dispositif de chargement (6) et au capteur (4, 5) et qui est configurée pour :
- soumettre, au moyen du dispositif d'application de charge (6), l'éprouvette pour essai de flexion (1) à une contrainte dynamique avec la force de flexion (F) pour la formation et/ou l'agrandissement d'une fissure accompagnant une modification de la section transversale de l'éprouvette pour essai de flexion (1), et enregistrer ce faisant la grandeur de mesure en tant que signal (c) variant dans le temps ;
- utiliser une paire de modes de vibration comprenant un premier mode de vibration de l'éprouvette pour essai de flexion (1) avant la modification de la section transversale et un deuxième mode de vibration de l'éprouvette pour essai de flexion (1) correspondant au premier mode de vibration après la modification de la section transversale pour la détermination d'un intervalle de fréquence en tant que paramètre de filtrage de telle sorte qu'une fréquence de résonance du premier mode de vibration et/ou une fréquence de résonance du deuxième mode de vibration se situe dans l'intervalle de fréquence ; et

- filtrer le signal (c) variant dans le temps en utilisant le paramètre de filtrage au moins au nombre de un, afin de définir un instant ($t_q$) auquel la modification de la section transversale de l'éprouvette pour essai de flexion (1) commence pendant le chargement dynamique.

13. Dispositif (100) selon la revendication 12, le dispositif de chargement (6) comprenant un testeur de chute guidée, un testeur de chute libre ou un testeur d'impact pendulaire.

14. Dispositif (100) selon l'une des revendications 12 ou 13, le capteur étant un capteur proportionnel de vibration de déviation, et/ou le dispositif comportant un capteur de force pouvant être étalonné.

15. Dispositif (100) selon l'une des revendications 12 à 14, l'unité de commande et d'analyse (50) étant agencée pour filtrer numériquement le signal (c) variant dans le temps, et/ou l'unité de commande et d'analyse (50) étant agencée pour mettre en œuvre un procédé selon l'une des revendications 1 à 11.

# FIG 1

# FIG 2

# FIG 3

FIG 4

FIG 5

# FIG 6

1000

# FIG 7

1001

## FIG 8

EP 3 413 031 B1

## FIG 9

<u>1</u>

## FIG 10

<u>1</u>

FIG 11

FIG 12

FIG 13

1

By

12'

FIG 14

1

Bz

12'

FIG 15

<u>1</u>

Tx

12'

z

x    y

FIG 16

<u>1</u>

Lx

13'

z

x    y

# FIG 17

# FIG 18

| 3L-Mode | Frequenz [Hz] RT | Modenart | Frequenz [Hz] -40°C |
|---|---|---|---|
| 1 | 0 | S | |
| 2 | 760 | S | |
| 3 | 3.024 | By | 3.055 |
| 4 | 3.149 | Bz/Lx | 3.182 |
| 5 | 3.833 | S | |
| 6 | 4.700 | Bz | 4.749 |
| 7 | 5.370 | Tx | 5.426 |
| 8 | 5.456 | Bz | 5.513 |
| 9 | 6.801 | By | 6.872 |
| 10 | 7.025 | Bz | 7.098 |
| 11 | 7.741 | Bz | 7.822 |
| 12 | 8.958 | Bz | 9.051 |
| 13 | 10.176 | Tx | 10.282 |
| 14 | 10.902 | By | 11.015 |
| 15 | 11.791 | Tx | 11.914 |
| 16 | 13.159 | Bz | 13.296 |
| 17 | 14.843 | Tx/By | 14.997 |
| 18 | 15.224 | Bz/Lx | 15.382 |
| 19 | 16.846 | Bz/Lx | 17.021 |
| 20 | 17.810 | Bz/Lx | 17.995 |
| 21 | 18.130 | Tx | 18.319 |
| 22 | 18.823 | Tx | 19.019 |
| 23 | 19.291 | By | 19.492 |
| 24 | 21.905 | Bz/Lx | 22.133 |
| 25 | 22.043 | Bz/Lx | 22.272 |
| 26 | 22.089 | Tx | 22.319 |
| 27 | 25.700 | By | 25.967 |
| 28 | 25.969 | Bx | 26.239 |
| 29 | 26.038 | Bz | 26.309 |
| 30 | 26.353 | Bx | 26.627 |

| 3L-Mode | Frequenz [Hz] RT | Modenart | Frequenz [Hz] -40°C |
|---|---|---|---|
| 1 | 0 | S | |
| 2 | 755 | S | |
| 3 | 2.790 | By | 2.819 |
| 4 | 3.117 | Bz/Lx | 3.149 |
| 5 | 3.831 | S | |
| 6 | 4.464 | Bz | 4.510 |
| 7 | 4.635 | Tx | 4.684 |
| 8 | 5.358 | Bz | 5.413 |
| 9 | 6.510 | By | 6.578 |
| 10 | 6.514 | Bz/Lx | 6.582 |
| 11 | 7.407 | Bz | 7.484 |
| 12 | 8.616 | Bz | 8.705 |
| 13 | 10.177 | Tx | 10.283 |
| 14 | 10.579 | By | 10.689 |
| 15 | 10.801 | Tx | 10.913 |
| 16 | 13.094 | Bz | 13.230 |
| 17 | 13.969 | Tx/By | 14.114 |
| 18 | 14.080 | Bz/Lx | 14.226 |
| 19 | 16.344 | Bz/Lx | 16.514 |
| 20 | 16.834 | Bz/Lx | 17.009 |
| 21 | 18.126 | Tx | 18.315 |
| 22 | 18.133 | Tx | 18.322 |
| 23 | 18.778 | By | 18.973 |
| 24 | 19.877 | Bz/Lx | 20.084 |
| 25 | 20.940 | Tx | 21.158 |
| 26 | 21.495 | Bz | 21.719 |
| 27 | 25.540 | Bx | 25.806 |
| 28 | 25.764 | Bx | 26.032 |
| 29 | 25.998 | Bz | 26.268 |
| 30 | 26.282 | Bx | 26.555 |

# FIG 19

| 2L-Mode | Frequenz [Hz] RT | Modenart | Frequenz [Hz] -40°C |
|---|---|---|---|
| 1 | 0 | S | 0 |
| 2 | 760 | S | 768 |
| 3 | 2.168 | Bz | 2.191 |
| 4 | 2.925 | S | 2.956 |
| 5 | 3.027 | By | 3.059 |
| 6 | 3.149 | Bz/Lx | 3.182 |
| 7 | 5.370 | Tx | 5.426 |
| 8 | 5.456 | Bz | 5.513 |
| 9 | 6.682 | Bz/Lx | 6.752 |
| 10 | 6.801 | By | 6.872 |
| 11 | 7.025 | Bz | 7.098 |
| 12 | 8.957 | Bz | 9.051 |
| 13 | 9.713 | Tx | 9.814 |
| 14 | 10.899 | By | 11.012 |
| 15 | 11.791 | Tx | 11.914 |
| 16 | 12.706 | Bz | 12.838 |
| 17 | 14.843 | Tx/By | 14.997 |
| 18 | 15.224 | Bz/Lx | 15.382 |
| 19 | 16.846 | Bz/Lx | 17.021 |
| 20 | 17.732 | Bz | 17.916 |
| 21 | 17.815 | Tx | 18.000 |
| 22 | 18.823 | Tx | 19.019 |
| 23 | 19.276 | By | 19.476 |
| 24 | 21.905 | Bz/Lx | 22.133 |
| 25 | 21.947 | Bz/Lx | 22.175 |
| 26 | 22.089 | Tx | 22.319 |
| 27 | 25.700 | By | 25.967 |
| 28 | 25.962 | Bx | 26.232 |
| 29 | 26.038 | Bz | 26.309 |
| 30 | 26.353 | Bx | 26.627 |

| 2L-Mode | Frequenz [Hz] RT | Modenart | Frequenz [Hz] -40°C | Frequenz [Hz] -25° |
|---|---|---|---|---|
| 1 | 0 | S | 0 | |
| 2 | 755 | S | 763 | |
| 3 | 2.143 | Bz | 2.166 | 2.160 |
| 4 | 2.790 | By | 2.819 | 2.811 |
| 5 | 2.929 | S | 2.959 | 2.952 |
| 6 | 3.117 | Bz/Lx | 3.149 | 3.141 |
| 7 | 4.635 | Tx | 4.683 | 4.671 |
| 8 | 5.358 | Bz | 5.413 | 5.399 |
| 9 | 5.621 | Bz/Lx | 5.679 | 5.665 |
| 10 | 6.511 | By | 6.578 | 6.561 |
| 11 | 6.946 | Bz | 7.018 | 7.000 |
| 12 | 8.615 | Bz | 8.705 | 8.683 |
| 13 | 9.713 | Tx | 9.814 | 9.789 |
| 14 | 10.575 | By | 10.685 | 10.657 |
| 15 | 10.801 | Tx | 10.913 | 10.885 |
| 16 | 12.644 | Bz | 12.775 | 12.743 |
| 17 | 13.969 | Tx/By | 14.114 | 14.078 |
| 18 | 14.079 | Bz/Lx | 14.225 | 14.189 |
| 19 | 16.344 | Bz/Lx | 16.514 | 16.471 |
| 20 | 16.767 | Bz/Lx | 16.941 | 16.898 |
| 21 | 17.816 | Tx | 18.001 | 17.955 |
| 22 | 18.126 | Tx | 18.315 | 18.267 |
| 23 | 18.763 | By | 18.958 | 18.909 |
| 24 | 19.877 | Bz/Lx | 20.084 | 20.032 |
| 25 | 20.939 | Tx | 21.157 | 21.102 |
| 26 | 21.400 | Bz/Lx | 21.623 | 21.567 |
| 27 | 25.540 | By | 25.806 | 25.739 |
| 28 | 25.735 | Bx | 26.003 | 25.936 |
| 29 | 25.997 | Bz | 26.267 | 26.200 |
| 30 | 26.260 | Bx | 26.533 | 26.465 |

# FIG 20

| ff-Mode | Frequenz [Hz] RT | Modenart | Frequenz [Hz] -40°C |
|---|---|---|---|
| 1 | 0 | S | 0 |
| 2 | 0 | S | 0 |
| 3 | 0 | S | 0 |
| 4 | 0 | S | 0 |
| 5 | 0 | S | 0 |
| 6 | 0 | S | 0 |
| 7 | 1.756 | Bz | 1.774 |
| 8 | 2.469 | By | 2.494 |
| 9 | 3.801 | Tx | 3.841 |
| 10 | 6.249 | Lx | 6.314 |
| 11 | 6.288 | By | 6.353 |
| 12 | 6.481 | Bz | 6.549 |
| 13 | 8.875 | Tx | 8.967 |
| 14 | 10.353 | Bz | 10.461 |
| 15 | 10.549 | By | 10.659 |
| 16 | 11.295 | Tx | 11.412 |
| 17 | 14.698 | Tx/By | 14.851 |
| 18 | 14.992 | Bz | 15.148 |
| 19 | 15.271 | Lx | 15.430 |
| 20 | 17.430 | Bz/Lx | 17.611 |
| 21 | 17.718 | Tx | 17.902 |
| 22 | 18.585 | Tx | 18.778 |
| 23 | 19.031 | By | 19.229 |
| 24 | 20.896 | Bz/Lx | 21.113 |
| 25 | 21.200 | Bz/Lx | 21.420 |
| 26 | 22.065 | Tx | 22.294 |
| 27 | 25.281 | Bx | 25.544 |
| 28 | 25.284 | Bx | 25.547 |
| 29 | 25.728 | By | 25.996 |
| 30 | 25.835 | Bz | 26.104 |

| ff-Mode | Frequenz [Hz] RT | Modenart | Frequenz [Hz] -40°C | Frequenz [Hz] -25° |
|---|---|---|---|---|
| 1 | 0 | S | 0 | 0 |
| 2 | 0 | S | 0 | 0 |
| 3 | 0 | S | 0 | 0 |
| 4 | 0 | S | 0 | 0 |
| 5 | 0 | S | 0 | 0 |
| 6 | 0 | S | 0 | 0 |
| 7 | 1.043 | Bz | 1.054 | 1.051 |
| 8 | 2.210 | By | 2.233 | 2.227 |
| 9 | 3.235 | Tx | 3.268 | 3.260 |
| 10 | 5.251 | Lx | 5.306 | 5.292 |
| 11 | 5.856 | By | 5.917 | 5.901 |
| 12 | 6.122 | Bz | 6.186 | 6.170 |
| 13 | 8.878 | Tx | 8.970 | 8.947 |
| 14 | 10.225 | By | 10.331 | 10.305 |
| 15 | 10.250 | Tx | 10.357 | 10.330 |
| 16 | 10.338 | Bz | 10.446 | 10.419 |
| 17 | 13.595 | Bz | 13.736 | 13.701 |
| 18 | 13.817 | Tx | 13.961 | 13.925 |
| 19 | 15.282 | Lx | 15.441 | 15.401 |
| 20 | 16.580 | Bz/Lx | 16.752 | 16.709 |
| 21 | 17.724 | Tx | 17.908 | 17.862 |
| 22 | 17.836 | Tx | 18.021 | 17.975 |
| 23 | 18.511 | By | 18.704 | 18.655 |
| 24 | 18.952 | Bz/Lx | 19.149 | 19.100 |
| 25 | 20.187 | Bz/Lx | 20.397 | 20.344 |
| 26 | 20.930 | Tx | 21.148 | 21.093 |
| 27 | 25.280 | Bx | 25.543 | 25.477 |
| 28 | 25.283 | Bx | 25.546 | 25.480 |
| 29 | 25.562 | By | 25.828 | 25.761 |
| 30 | 25.654 | Bz | 25.921 | 25.854 |

## FIG 21

## FIG 22

FIG 23

FIG 24

## FIG 25

## FIG 26

FIG 27

FIG 28

# FIG 29

# FIG 30

# FIG 31

# FIG 32

## FIG 33

## FIG 34

FIG 35

FIG 36

FIG 37

FIG 38

FIG 39

FIG 40

FIG 41

FIG 42

## FIG 43

## FIG 44

# FIG 45

# FIG 46

## FIG 47

## FIG 48

## FIG 49

## FIG 50

## FIG 51

## FIG 52

**EP 3 413 031 B1**

**IN DER BESCHREIBUNG AUFGEFÜHRTE DOKUMENTE**

**In der Beschreibung aufgeführte Nicht-Patentliteratur**

- **AI MATSUMOTO et al.** Three-dimensional Visualization of Dynamic Oscillation of Structural Components Using Inhomogeneous Wireless Sensors. *PROCEDIA ENGINEERING,* 09. Mai 2017, vol. 188, 102-109